# EUROPÄISCHE PATENTSCHRIFT

(11) **EP 2 210 029 B1**
(45) Veröffentlichungstag und Bekanntmachung des Hinweises auf die Patenterteilung: **29.06.2011**
(21) Anmeldenummer: 08805171.9
(22) Anmeldetag: 09.10.2008
(51) Int. Cl.: F16L 9/147, F16L 55/165

(54) **ROHR ZUR FÜHRUNG VON FLÜSSIGKEITEN SOWIE VERFAHREN ZUR HERSTELLUNG DESSELBEN**
PIPE FOR CHANNELLING LIQUIDS, AND METHOD OF PRODUCING THE SAME
CONDUIT DE CIRCULATION DE LIQUIDES, ET SON PROCEDE DE FABRICATION

(30) Priorität: 12.10.2007 DE 102007050344
(43) Veröffentlichungstag der Anmeldung: 28.07.2010
(73) Patentinhaber: Düker GmbH & Co. KGaA, 97753 Karlstadt (DE)
(72) Erfinder: WIEDEMANN, Jan, 97855 Triefenstein (DE); BEHLER, Franz-Josef, 97084 Würzburg (DE)
(74) Vertreter: Hoeger, Stellrecht & Partner Patentanwälte
(86) Internationale Anmeldenummer: PCT/EP2008/063524
(87) Internationale Veröffentlichungsnummer: WO 2009/050100

(56) Entgegenhaltungen:
- DE-A1- 3 934 980
- DE-C1- 19 831 190
- GB-A- 2 410 308
- US-A- 2 423 902
- US-A- 2 724 672
- US-A- 4 325 772
- US-A- 4 773 450
- US-A- 5 706 861
- US-A- 5 817 200
- US-A1- 2002 069 924
- US-A1- 2005 016 450
- US-B1- 6 299 803

## Beschreibung

Die Erfindung betrifft ein Rohr zur Führung von Flüssigkeiten, insbesondere zur Führung von Prozesswasser oder von privatem und/oder gewerblichem und/oder chemisch belastetem Abwasser, umfassend einen Rohrkörper und eine einen Durchlasskanal umschließende und gegenüber den Flüssigkeiten im Wesentlichen standfeste Auskleidung.

Derartige Rohre sind aus dem Stand der Technik bekannt, siehe US 2002/0069924 A1, bei diesen Rohren ist der Rohrkörper mit einer Beschichtung, beispielsweise aus einer aufgetragenen Beschichtungsmasse aus Harz oder Beton oder einer Emaillierung versehen.

Diese Beschichtungen haben den Nachteil, dass entweder deren Aufbringen aufwändig ist oder deren Standfestigkeit gegenüber verschiedenen Arten von Flüssigkeiten über lange Zeiträume nicht ausreichend ist.

Bei den erfindungsgemäßen Rohren handelt es sich um Neurohre die zur Verlegung in Gebäuden oder unter der Erde vorgesehen sind und somit noch nicht zur Führung von Flüssigkeiten eingesetzt wurden.

Insbesondere betrifft die Erfindung nicht bereits zur Führung von Flüssigkeiten benutzte Rohre, die nachträglich - insbesondere zur Reparatur von Rohrschäden - mit einer Auskleidung versehen werden.

Der Erfindung liegt daher die Aufgabe zugrunde, ein Rohr der gattungsgemäßen Art derart zu verbessern, dass dieses ein für die jeweiligen Gebrauchszwecke optimiertes Verhalten aufweist.

Diese Aufgabe wird bei einem Rohr der eingangs beschriebenen Art erfindungsgemäß dadurch gelöst, dass die Auskleidung durch eine Innenhülle aus einer Kunststofffolie gebildet ist, welche mit einer Innenwandfläche des Rohrkörpers stoffschlüssig verbunden ist.

Der Vorteil der erfindungsgemäßen Lösung ist darin zu sehen, dass durch die Ausbildung der Auskleidung als Innenhülle aus einer Kunststofffolie in einfacher Weise eine gegenüber verschiedensten Flüssigkeiten standfeste Auskleidung zur Verfügung steht, welche den Rohrkörper vor jeder Art von Korrosion und/oder Degradation schützt.

Besonders günstig ist es dabei, wenn die Innenhülle aus einem an die Innenwandfläche des Rohrkörpers angelegten Schlauch aus Kunststofffolie hergestellt ist, da damit eine den Durchlasskanal vollständig umschließende und somit nahtlose Innenhülle, die somit insbesondere eine verbesserte Standfestigkeit gegenüber aggressiven Flüssigkeiten aufweist, zur Verfügung stellt.

Um die Innenhülle in einfacher Weise als Auskleidung an der Innenwandfläche des Rohrkörpers fixieren zu können, ist vorzugsweise vorgesehen, dass der Schlauch aus einer dehnbaren Kunststofffolie hergestellt ist, da damit durch ein Dehnen der Kunststofffolie in einfacher Weise ein faltenfreies Anlegen derselben an der Innenwandfläche des Rohrkörpers möglich ist.

Besonders vorteilhaft lässt sich daher eine derartige als Schlauch ausgebildete Innenhülle an dem Rohrkörper fixieren, wenn der Schlauch im gedehnten Zustand stoffschlüssig mit der Innenwandfläche des Rohrkörpers verbunden ist.

Ergänzend ist bei einem vorteilhaften Ausführungsbeispiel vorgesehen, dass Stirnseiten des Rohrkörpers mit einem Kunststofffilm beschichtet sind.

Ein derartiger Kunststofffilm lässt sich beispielsweise durch Kunststoffpartikel, die auf die Stirnseiten aufgetragen werden, herstellen.

Ein hierzu besonders geeignetes Verfahren ist das Flammspritzen, bei welchem Kunststoffpartikel erhitzt, angeschmolzen und auf die vorgeheizten Stirnflächen ausgetragen werden, so dass sie auf diesen eine Schmelze bilden und den Kunststofffilm bilden.

Vorzugsweise erfolgt das Auftragen des Kunststofffilms nach einem Auskleiden des Rohrkörpers mit der Kunststofffolie, so dass der Kunststofffilm die Kunststofffolie im Anschluss an die Stirnseiten überdeckt.

Der Kunststofffilm kann aber auch durch eine Kunststofffolie gebildet werden, welche an den Stirnseiten durch Verkleben fixiert ist.

In diesem Fall ist vorgesehen, dass die den Rohrkörper als Innenhülle auskleidende Kunststofffolie über die Stirnseiten des Rohrkörpers überstehend aufgebracht wird und über die Stirnseiten gezogen wird.

Alternativ dazu ist es möglich, dass eine auf den Stirnseiten aufgebrachte Kunststofffolie die Stirnseiten übergreift und mit der Innenhülle nahe den Stirnseiten des Rohrkörpers überlappt.

Vorzugsweise wird zuerst die Innenhülle eingebracht und nachfolgend die Kunststofffolie auf den Stirnseiten fixiert.

Besonders günstig ist eine stoffschlüssige Verbindung zwischen der Innenhülle und der die Stirnseiten übergreifenden Kunststofffolie. Diese stoffschlüssige Verbindung kann durch Kleben oder thermische Erweichung des Kunststoffmaterials oder Schweißen hergestellt werden.

Das Material des Kunststofffilms kann prinzipiell von dem Material der Kunststofffolie abweichen.

Besonders günstig ist es jedoch, wenn das Material des Kunststofffilms ähnlich, vorzugsweise identisch, dem der Kunststofffolie ist und sich mit diesem stoffschlüssig verbindet.

Insbesondere ist das Material des Kunststofffilms ebenfalls ein Polymer, vorzugsweise ein Polypropylen.

Eine besonders zweckmäßige Ausbildung der Kunststofffolie sieht vor, dass diese frei von Verstärkungsfasern ist, da damit die Möglichkeit besteht, dass sich die Kunststofffolie der teilweise von idealen Parametern abweichenden Form des Rohrkörpers optimal und möglichst faltenfrei anpassen kann.

Ferner ist es für die Wiederverwertung von besonderem Vorteil, wenn die Kunststofffolie aus einem recyclebaren Kunststoff ist.

Als besonders geeignetes Material für die Kunststofffolie hat sich herausgestellt, wenn diese aus einem Thermoplast hergestellt ist.

Um eine optimale Anpassung der Kunststofffolie an die Verhältnisse des Rohrkörpers zu erhalten, ist vorzugsweise vorgesehen, dass die Kunststofffolie einen Elastizitätsmodul von kleiner als ungefähr 700 MPa aufweist.

Allerdings sollte die Kunststofffolie ausreichend stabil sein, so dass es sich als zweckmäßig herausgestellt hat, wenn die Kunststofffolie einen Elastizitätsmodul von mehr als ungefähr 400 MPa aufweist.

Das Vorsehen einer Kunststofffolie als Auskleidung des Rohrkörpers hat jedoch auch Konsequenzen für einen Brandfall, insbesondere für die Brandsicherheit eines derartigen erfindungsgemäßen Rohrs.

Insbesondere gibt es eine Vielzahl von Kunststoffen, die bei einem Erhitzen erweichen und sich lösen und beispielsweise bei vertikal verlaufenden Rohren abtropfen.

Aus diesem Grund ist es besonders vorteilhaft, wenn sich die Kunststofffolie im Verlauf eines Aufheizens auf mehr als 320°C, noch besser mehr als 360°C tropfenbildungsfrei verhält.

Dieses Verhalten hat den großen Vorteil, dass damit sich die Kunststofffolie nicht von dem Rohrkörper löst und im Übrigen abtropft und gegebenenfalls an einem anderen Ort sich ablagert und dort gegebenenfalls weiter brennt.

Besonders zweckmäßig ist es in diesem Zusammenhang, wenn die Kunststofffolie im Verlauf eines Aufheizens gegenüber der Viskosität bei Raumtemperatur eine maximale Viskositätsabnahme um weniger als einen Faktor 10, noch besser um weniger als einen Faktor 5 aufweist.

Besonders günstig ist es, wenn die Kunststofffolie im Verlauf eines Aufheizens auf eine Temperatur von über 320°C, noch besser über 360°C, gegenüber der Viskosität bei Raumtemperatur eine Viskositätszunahme zeigt.

Durch eine derartige Viskositätszunahme ist auf jeden Fall ein Abtropfen der Kunststofffolie verhindert.

Besonders günstig ist es, wenn die Kunststofffolie im Verlauf eines Aufheizens auf eine Temperatur von über 360°C gegenüber der Viskosität bei ungefähr 200°C eine Viskositätszunahme um mehr als einen Faktor 10, vorzugsweise mehr als einen Faktor 50, zeigt, so dass damit die Viskosität der Kunststofffolie signifikant ansteigt und somit ein Abtropfen der Folie von der Innenwandfläche des Rohrkörpers ausgeschlossen ist.

Ferner ist es besonders günstig, wenn die Kunststofffolie beim Aufheizen auf eine Temperatur von über 360° pyrolysiert, so dass die Kunststofffolie einerseits weiterhin als Auskleidung an der Innenwandfläche des Rohrkörpers verbleibt und selbst lediglich in einen pyrolysierten Zustand übergeht.

Um ferner die Gefahr auszuschließen, dass sich im Brandfall ein Brand über die Kunststofffolie weiter ausbreitet, ist vorzugsweise vorgesehen, dass die Kunststofffolie im Verlauf des Aufheizens bis zur Pyrolyse einen Heizwert von weniger als 700 J/g besser weniger als 350 J/g, und noch besser weniger als 250 J/g, aufweist. Damit kann die Kunststofffolie im Brandfalle nicht zur weiteren Ausbreitung eines Brandes beitragen.

Die Kunststofffolie kann eine Folie aus einer einzigen Schicht sein.

Besonders vorteilhaft ist eine mehrere Schichten aufweisende Kunststofffolie bei welcher die einzelnen Schichten einzelnen Funktionalitäten zugeordnet und entsprechend ausgebildet werden können.

So ist es möglich, eine dem Rohrkörper zugewandte Schicht als eine sogenannte Haftschicht auszuführen, welche gute Hafteigenschaften, insbesondere für die Kleberschicht, aufweist.

Ferner ist es von Vorteil, wenn die an einen Durchlasskanal des Rohres angrenzende Schicht als Funktionsschicht ausgebildet ist.

Eine Funktionsschicht hat dabei beispielsweise mindestens eine der folgenden Eigenschaften
diffusionssperrend gegen Schwefelwasserstoff,
diffusionssperrend gegen Wasserdampf,
diffusionssperrend gegen korrosive Gase,
erhöht abrasionsbeständig,
erhöht chemikalienbeständig,
erhöht temperaturbeständig,
erhöht biologisch beständig.

Alternativ oder ergänzend zur eingangs genannten Aufgabe ist eine weitere Aufgabe der erfindungsgemäßen Lösung darin zu sehen, ein Rohr zu schaffen, welches in einem Brandfalle eine Weiterleitung des Brandes unterdrückt.

Aus diesem Grund sieht alternativ oder ergänzend zu der bislang beschriebenen Lösung eine erfindungsgemäße Ausführungsform vor, dass die eine die Innenhülle bildende Kunststofffolie aus einer intumeszierenden Materialmatrix gebildet ist.

Der Vorteil dieser Ausführungsform ist darin zu sehen, dass die intumeszierende Materialmatrix bei einem Erhitzen ihr Volumen vergrößert, so dass die intumeszierende Materialmatrix im Brandfall expandiert und dadurch die Weiterleitung eines Brandes unterdrückt, insbesondere durch eine mit der Expansion verbundene aufgrund einer Blasenbildung reduzierte Wärmeleitung und insbesondere durch Unterdrückung einer Diffusion von möglichen Brandgasen in der Kunststofffolie durch Einlagerung von Gasen in den Blasen. Besonders günstig ist es, wenn die Materialmatrix der Kunststofffolie beim Erhitzen auf mehr als 300°C eine Volumenvergrößerung von mehr als 300% gegenüber einem Ausgangszustand zeigt.

Ferner ist es von Vorteil, wenn die Kunststofffolie bei einer Temperatur von über 300°C aufgrund ihrer intumeszierenden Materialmix einen verdickten Wandbereich ausbildet.

Hinsichtlich der Zusammensetzung der Materialmatrix der Kunststofffolie wurden im Zusammenhang mit der bisherigen Erläuterung der einzelnen Ansprüche keine näheren Angaben gemacht.

So sieht eine zweckmäßige Lösung vor, dass die Kunststofffolie eine Polyolefine umfassende Materialmatrix aufweist.

Besonders günstig ist es, wenn die Kunststofffolie eine Polypropylen umfassende Materialmatrix aufweist.

Dabei ist der Anteil des Polypropylens noch nicht näher spezifiziert. Eine zweckmäßige Zusammensetzung sieht dabei vor, dass die Materialmatrix Polypropylen mit einem Anteil zwischen ungefähr 65 Gewichts-% und ungefähr 90 Gewichts-% umfasst.

Eine noch günstigere Zusammensetzung sieht vor, dass die Materialmatrix Polypropylen mit einem Anteil zwischen ungefähr 70 Gewichts-% und ungefähr 85 Gewichts-% umfasst.

Um die intumeszierende Wirkung der Materialmatrix zu erreichen, ist vorzugsweise vorgesehen, dass die Materialmatrix als Füllstoff intumeszierend wirkende Partikel aufweist.

Diese intumeszierend wirkenden Partikel können unterschiedlich zusammengesetzt sein.

Eine Lösung sieht vor, dass die intumeszierend wirkenden Partikel Ammoniumpolyphosphat umfassen.

Eine andere Ausführungsform sieht vor, dass die intumeszierend wirkenden Partikel Blähgraphit umfassen.

Insbesondere bei einer Mischung von Blähgraphit und Ammoniumpolyphosphat ergeben sich besonders vorteilhafte intumeszierende Eigenschaften.

Vorzugsweise reicht ein auf Gewichtsprozente bezogenes Mischungsverhältnis von Blähgraphit zu Ammoniumpolyphosphat von 1:1 bis 6: 1, wobei Werte Zwischen 3,5:1 und 4,5:1 besonders günstig sind.

Dabei liegt der Anteil des Blähgraphits in der Materialmatrix zwischen ungefähr 10 Gewichtsprozent und 25 Gewichtsprozent, insbesondere 15 Gewichtsprozent und 20 Gewichtsprozent der Materialmatrix.

Zweckmäßigerweise ist vorgesehen, dass die intumeszierend wirkenden Partikel insgesamt mit einem Anteil zwischen ungefähr 25 Gewichts-% und ungefähr 5 Gewichts-% in der Materialmatrix vorliegen.

Eine andere günstige Lösung sieht vor, dass die intumeszierend wirkenden Partikel mit einem Anteil zwischen ungefähr 20 Gewichts-% und ungefähr 10 Gewichts-% in der Materialmatrix vorliegen.

Ferner ist eine erfindungsgemäße Materialmatrix zweckmäßigerweise so aufgebaut, dass diese als Füllstoff viskositätserhöhende Partikel umfasst.

Derartige viskositätserhöhende Partikel können in verschiedensten Größenordnungen vorgesehen sein.

Eine besonders vorteilhafte Wirkung der viskositätserhöhenden Partikel liegt dann vor, wenn die viskositätserhöhenden Partikel Nanopartikel sind.

Ferner lässt sich die Wirkung der viskositätserhöhenden Partikel dann noch verbessern, wenn die viskositätserhöhenden Partikel eine Schichtstruktur aufweisen.

Beispielsweise sind in diesem Fall die viskositätserhöhenden Partikel als Schichtsilikate, z. B Montmorillonit umfassende Partikel ausgebildet.

Hinsichtlich der Zusammensetzung der viskositätserhöhenden Partikel in der Materialmatrix wurden ebenfalls keine näheren Angaben gemacht.

Eine zweckmäßige Lösung sieht vor, dass die viskositätserhöhenden Partikel mit einem Anteil zwischen ungefähr 3 Gewichts-% und ungefähr 1 Gewichts-% in der Materialmatrix vorliegen.

Um ferner eine gute Einbettung der viskositätserhöhenden Partikel in der Materialmatrix aus Polymeren zu erreichen, ist vorzugsweise vorgesehen, dass die Materialmatrix als Füllstoff einen Haftvermittler für die viskositätserhöhenden Partikel umfasst.

Beispielsweise wird als Haftvermittler ein gepfropftes Polypropylen mit Maleinsäureanhydrit eingesetzt.

Der Haftvermittler liegt beispielsweise mit einem Anteil zwischen ungefähr 5 Gewichts-% und ungefähr 2 Gewichts-% in der Materialmatrix vor.

Hinsichtlich der Dicke der Kunststofffolie wurden im Zusammenhang mit der bisherigen Erläuterung der einzelnen Ausführungsformen keinerlei weitere Angaben gemacht.

Eine zweckmäßige Lösung sieht dabei vor, dass die Kunststofffolie eine Wanddicke zwischen ungefähr 0,2 mm und ungefähr 0,5 mm aufweist, noch besser zwischen ungefähr 0,15 mm und ungefähr 0,3 mm.

Im Zusammenhang mit der Ausbildung des Rohrkörpers als Bestandteil des erfindungsgemäßen Rohrs wurden bislang keine näheren Angaben gemacht.

Bei einer Ausführungsform ist der Rohrkörper ein metallischer Rohrkörper.

Zweckmäßigerweise ist der Rohrkörper als Körper aus Metallguss, insbesondere Eisenguss, hergestellt.

Besonders zweckmäßig ist es dabei, wenn die Innenwandfläche des Rohrkörpers schlackenfrei ist.

Vorzugsweise ist dabei die Innenwandfläche des Rohrkörpers durch eine Oberflächenbearbeitung gereinigt.

Bei der Oberflächenbearbeitung sind mehrere Bearbeitungsmöglichkeiten denkbar.

Eine vorteilhafte Bearbeitungsmöglichkeit sieht vor, dass die Oberflächenbearbeitung ein Bürsten und/oder Schleifen und/oder Strahlen der Innenwandfläche umfasst.

Ferner wurde im Zusammenhang mit der erfindungsgemäßen Lösung nicht näher darauf eingegangen, wie die Innenhülle stoffschlüssig mit der Innenwandfläche des Rohrkörpers verbunden sein soll. Beispielsweise könnte die stoffschlüssige Verbindung durch das Material der Kunststofffolie selbst erreicht werden.

Eine zweckmäßige Lösung sieht dabei vor, dass die Innenhülle durch eine Klebstoffschicht fest mit der Innenwandfläche des Rohrkörpers verbunden ist.

Hinsichtlich der Ausbildung der Klebstoffschicht wurden dabei keine näheren Angaben gemacht. So sind mehrere Klebersysteme denkbar.

Eine zweckmäßige Lösung sieht vor, dass die Klebstoffschicht aus einem ZweiKomponenten-Epoxidharz-Klebersystem gebildet ist. Ein derartiges Epoxidharz-Klebersystem hat den Vorteil, dass es so aufgebaut sein kann, dass es beim Einbringen der Innenhülle diese so rasch mit der Innenwandfläche verklebt, dass bis zum endgültigen Vernetzen des Klebersystems die Innenhülle zuverlässig an der Innenwandfläche hält.

Zweckmäßigerweise ist dabei bei einem derartigen Epoxidharz-Klebersystem vorgesehen, dass dieses eine ausreichende Haftfestigkeit aufweist, der durch Erhitzen erreichbar ist.

Vorzugsweise ist dabei vorgesehen, dass die ausreichende Haftfestigkeit durch Erhitzen auf ungefähr 150°C in weniger als 60 Sekunden, noch besser in weniger als 50 Sekunden, und besonders vorteilhaft in weniger als 40 Sekunden erreichbar ist.

Die ausreichende Haftfestigkeit ist vorzugsweise erreicht, wenn mindestens ungefähr 60%, besser ungefähr 70% und noch besser ungefähr 80% der reaktiven Polymerketten vernetzt sind.

Die ausreichende Haftfestigkeit äußert sich auch in einer Viskositätszunahme um mindestens 10⁴ Pascal, noch besser mindestens 10⁵ Pascal.

Ferner wurde bislang nicht im Einzelnen darauf eingegangen, wie die Innenhülle mit der Innenfläche des Rohrkörpers verklebt sein soll.

So sieht eine zweckmäßige Lösung vor, dass die Innenhülle vollflächig mit der Innenfläche des Rohrkörpers verklebt ist.

Darüber hinaus betrifft die Erfindung ein Verfahren zum Herstellen eines Rohrs zum Führen von Flüssigkeiten, insbesondere zur Führung von privatem und/oder gewerblichem und/oder chemisch belasteten Abwasser, mit einem Rohrkörper und einer einen Durchlasskanal des Rohrs umschließenden und gegenüber den Flüssigkeiten im Wesentlichen standfesten Auskleidung.

Auch bei einem derartigen Verfahren besteht die Aufgabe darin, ein Verfahren zur Herstellung eines derartigen Rohrs zu schaffen, das die an ein derartiges Rohr gestellten Anforderungen noch besser erfüllt.

Diese Aufgabe wird bei einem Verfahren der vorstehend beschriebenen Art erfindungsgemäß dadurch gelöst, dass die Auskleidung in Form einer Kunststofffolie als Innenhülle an eine Innenwandfläche des Rohrkörpers angelegt und mit der Innenwandfläche stoffschlüssig verbunden wird.

Der Vorteil eines dieses Verfahrens ist darin zu sehen, dass mit diesem eine einfache Möglichkeit zur Verfügung steht, ein Rohr herzustellen, insbesondere ein Neurohr herzustellen, welches aufgrund der Art der Auskleidung die an dieses gestellten Anforderungen besonders zweckmäßig erfüllt.

Eine vorteilhafte Lösung sieht dabei vor, dass die Innenhülle als nicht oder geringfügig expandierter Schlauch in den Rohrkörper eingeführt und der Schlauch durch Expandieren an die Innenwandfläche des Rohrkörpers zum stoffschlüssigen Verbinden mit dieser angelegt wird.

Diese Lösung schafft einerseits die Möglichkeit, eine um den Durchlass herum verlaufende geschlossene Innenhülle zu erhalten, insbesondere eine nahtlos geschlossene Innenhülle, so dass keinerlei Gefahr besteht, dass sich die Naht löst und somit die Auskleidung zumindest teilweise ihre Wirkung verliert. Andererseits ist die Möglichkeit besonders einfach realisierbar und erlaubt es auch, einen industriellen Produktionsprozess für die Herstellung erfindungsgemäßer Rohre mit dem erforderlichen ausreichend hohen Ausstoß durchzuführen.

Besonders zweckmäßig lässt sich das erfindungsgemäße Verfahren durchführen, wenn der nicht oder geringfügig expandierte Schlauch auf einem Expansionsorgan in den Rohrkörper eingeführt und durch Expansion des Expansionsorgans an der Innenwandfläche angelegt wird.

Ein derartiges Expansionsorgan ist beispielsweise als Blähdorn ausgebildet und erlaubt es in einfacher Weise, den Schlauch durch Aufblähen eines Mantels des Blähdorns flächig kraftbeaufschlagt an die Innenwandfläche anzulegen.

Das Expansionsorgan kann dabei so ausgebildet sein, dass es den Schlauch im Wesentlichen gleichzeitig innerhalb des Rohrkörpers an diesen anlegt.

Um jedoch die Bildung von Luftblasen zu vermeiden und insbesondere die Luft zwischen dem Schlauch und dem Rohrkörper in Richtung der Rohrkörperenden zu drücken, ist vorzugsweise vorgesehen, dass der Schlauch zuerst mit einem mittigen Bereich am Rohrkörper angelegt wird und dann hiervon ausgehend zunehmend in Richtung der Rohrkörperenden an dem Rohrkörper angelegt wird, so dass die beim Anlegen des Schlauchs am Rohrkörper verdrängte Luft in Richtung der Rohrkörperenden entweichen kann.

Dies lässt sich beispielsweise mit einem über seinen Länge segmentierten Expansionsorgan erreichen, bei welchem die Segmente einzeln expandierbar sind.

Eine einfache Alternative hierzu sieht vor, dass ein Mantel des Blähdorns in Richtung seiner Längserstreckung Bereiche unterschiedlicher Elastizität aufweist und dadurch zuerst mit seinem mittigen Mantelbereich expandiert und dann sukzessive mit in Richtung der Enden des Blähdorns folgenden Mantelbereichen.

Eine einfache Lösung für eine derartige variierende Elastizität des Mantels sieht vor, dass diese eine variierende Dicke aufweist, wobei dünne Bereiche eine höhere Elastizität haben als dicke Bereiche.

Um die stoffschlüssige Verbindung mit der Innenwandfläche in einfacher Weise realisieren zu können, ist vorzugsweise vorgesehen, dass der Schlauch vor Einführen in den Rohrkörper mit einem Klebstoff beschichtet wird und durch Expansion des Schlauchs und Anlegen desselben an der Innenwandfläche der Schlauch mit der Innenwandfläche verklebt wird.

Um eine möglichst große Haltbarkeit zu erreichen und außerdem zu erreichen, dass die Innenhülle über ihre ganze Fläche von dem Rohrkörper gestützt wird und somit keine Eigensteifigkeit aufweisen muss, ist vorzugsweise vorgesehen, dass der Schlauch vollflächig mit der Innenwandfläche verklebt wird.

Ein derartiges Verfahren lässt sich besonders einfach dann durchführen, wenn der Schlauch aus einer dehnbaren Kunststofffolie hergestellt und in dem Rohrkörper durch Expansion in Umfangsrichtung gedehnt wird.

Um dabei eine zu große Dehnung des Schlauches zu vermeiden, insbesondere wenn der Durchmesser, mit welchem der Schlauch in den Rohrkörper eingeführt werden soll, Toleranzen aufgrund variierender Innendurchmesser der Innenwandfläche und aufgrund von mangelnder Geradheit des Rohrkörpers ausgleichen muss, ist vorzugsweise vorgesehen, dass der Schlauch als gefalteter Schlauch hergestellt und in den Rohrkörper eingeführt und in dem Rohrkörper durch Expansion entfaltet wird.

Damit besteht die Möglichkeit, allein durch Entfalten des gefalteten Schlauchs die Ausdehnung des Schlauchs in Umfangsrichtung zu vergrößern, so dass entweder gar keine oder nur eine geringfügige Dehnung erforderlich ist, um den Schlauch vollflächig an der Innenwandfläche anzulegen.

Ein derartiges Falten des Schlauchs sieht beispielsweise vor, dass der Schlauch mit in Längsrichtung des Rohrkörpers verlaufenden Falten gefaltet wird, in den Rohrkörper eingeführt und im Rohrkörper entfaltet wird. Derartige in Längsrichtung des Rohrkörpers verlaufende Falten lassen in einfacher Weise durch Entfalten eine Umfangszunahme des Schlauchs realisieren.

Das Falten des Schlauchs vor Einführung desselben in den Rohrkörper kann dabei in unterschiedlichster Art und Weise erfolgen.

Eine zweckmäßige Lösung sieht vor, dass der Schlauch vor Einführung desselben in den Rohrkörper durch Prägen gefaltet wird.

Ein derartiges Prägen ist in unterschiedlichster Weise realisierbar und die dabei entstehenden Falten sind auch je nach Prägevorgang unterschiedlich stabil. Eine zweckmäßige Lösung sieht vor, dass der Schlauch zum Prägen auf eine Thermoformtemperatur aufgeheizt und geprägt wird, so dass damit die Prägung nachhaltig in dem Schlauch erhalten bleibt und somit beispielsweise auch eine Vorfixierung des Schlauchs auf dem Expansionsorgan in einfacher Art und Weise realisierbar ist.

Das Prägen kann dabei beispielsweise in einfacher Weise durch Prägewerkzeuge erfolgen, wobei die Prägewerkzeuge zweckmäßigerweise Prägewalzen sind.

Hinsichtlich der Herstellung des Schlauchs wurden bislang keine näheren Angaben gemacht.

Im einfachsten Fall lässt sich der Schlauch dadurch herstellen, dass dieser durch Extrusion, d.h. Blasfolienherstellung, mit einer näherungsweise einem Umfang der Innenwandfläche entsprechenden Nennweite extrudiert wird oder durch Schneiden einer Folie und überlappendes Legen sowie Versehen mit einer Siegelnaht im Überlappungsbereich gebildet wird.

Besonders günstig ist es, wenn der Schlauch auf einen geringeren Umfang als dem der Nennweite entsprechenden Umfang extrudiert wird.

Um den Schlauch mit dem Kleber prozesssicher an der Innenwandfläche des Rohrkörpers fixieren zu können, ist vorzugsweise vorgesehen, dass der Schlauch durch das Expansionsorgan auf eine vorgebbare Temperatur temperierbar ist.

Dies lässt sich besonders günstig dadurch erreichen, dass das Expansionsorgan mit seinen den Schlauch tragenden Seiten temperierbar ist.

Beispielsweise wird hierzu das Expansionsorgan mit einem temperierbaren Medium durchströmt, wobei dieses Medium eine Flüssigkeit oder ein Gas sein kann.

Besonders günstig ist es hierbei, wenn der Mantel des Blähdorns auf eine vorgebbare Temperatur temperierbar ist.

Mit diesen Maßnahmen lässt sich ein unerwünschtes Erwärmen oder gegebenenfalls auch ein Abkühlen des Schlauchs vermeiden, so dass der Schlauch selbst definierbare Materialeigenschaften aufweist und insbesondere ein Ankleben des Schlauchs an dem Mantel des Blähdorns verhindert wird, da sich der Mantel des Blähdorns durch Kontakt mit dem Schlauch und dem heißen Rohrstück unerwünscht aufheizen kann. Außerdem führt eine aktive Kühlung des Mantels auch zu einer Verkürzung der Einsatzzeiten des Blähdorns.

Um eine gute Verbindung des Kunststoffmaterials des Schlauchs mit dem Klebstoff zu erreichen, ist vorzugsweise vorgesehen, dass das Kunststoffmaterial des Schlauchs vor dem Versehen mit dem Klebstoff aktiviert wird.

Ein derartiges Aktivieren des Kunststoffmaterials des Schlauchs kann beispielsweise durch ein Plasma erfolgen, welches die Polymerketten des Kunststoffmaterials zumindest oberflächlich partiell zerstört und funktionalisiert, um eine bessere Haftung des Klebstoffs zu erreichen.

Um außerdem zu erreichen, dass der Klebstoff möglichst rasch aushärtet und somit den Schlauch an der Innenwandfläche fixiert, ist vorzugsweise vorgesehen, dass der Schlauch in den aufgeheizten Rohrkörper eingebracht wird.

Vorzugsweise ist dabei der Rohrkörper auf eine Temperatur im Bereich zwischen ungefähr 150°C und ungefähr 250°C aufgeheizt. Besonders zweckmäßig ist es, wenn der Rohrkörper auf eine Temperatur im Bereich zwischen ungefähr 160°C und ungefähr 220°C, noch besser zwischen ungefähr 180°C und ungefähr 220°C, aufgeheizt ist.

Der Rohrkörper kann dabei auf unterschiedliche Art und Weise aufgeheizt werden.

Beispielsweise ist eine Aufheizung mit einem heißen Medium oder durch Wärmestrahlung möglich.

Eine besonders vorteilhafte Vorgehensweise sieht vor, dass der Rohrkörper durch Wirbelströme aufgeheizt wird.

Diese Wirbelströme lassen sich beispielsweise durch Wirbelstromgeneratormodule erzeugen.

Zweckmäßigerweise erfolgt beim Aufheizen des Rohrkörpers durch Wirbelströme ein Drehen des Rohrkörpers relativ zu den Wirbelstromgeneratormodulen.

Die Fixierung des Schlauchs mittels des aushärtenden Klebstoffs an der Innenwandfläche des Rohrkörpers lässt sich dadurch erreichen, dass der Schlauch durch Expansion des Expansionsorgans an den aufgeheizten Rohrkörper angelegt wird.

Vorzugsweise ist dabei vorgesehen, dass das Expansionsorgan so lange auf den Schlauch einwirkt, bis der Klebstoff eine ausreichende Haftfestigkeit, die sich beispielsweise manifestiert in einer Viskosität von mindestens 10⁴ Pascal, noch besser mindestens 10⁵ Pascal, erreicht hat, das heißt der Klebstoff so weit vernetzt ist, dass dieser den Schlauch an der Innenwandfläche des Rohrkörpers fixiert hält.

Zweckmäßigerweise ist bei dem erfindungsgemäßen Verfahren, um eine möglichst hohe Produktivität zu erreichen, vorgesehen, dass nach Erreichen der ausreichenden Haftfestigkeit des Klebstoffs die Expansion des Schlauchs beendet wird.

Im Zusammenhang mit der bisherigen Erläuterung des erfindungsgemäßen Verfahrens wurde nicht im Einzelnen darauf eingegangen, wie der Rohrkörper für das Einbringen der Auskleidung vorbereitet wird.

Eine vorteilhafte Lösung sieht dabei vor, dass der Rohrkörper vor dem Einbringen der Auskleidung von Schlacke befreit wird.

Ferner ist es vorteilhaft, wenn der Rohrkörper insgesamt vor dem Einbringen der Auskleidung mechanisch gereinigt wird.

Eine derartige mechanische Reinigung lässt sich beispielsweise dadurch erreichen, dass der Rohrkörper durch einen Bürstvorgang und/oder Schleifvorgang und/oder Strahlvorgang gereinigt wird.

Ferner wurden hinsichtlich der Herstellung des Rohrkörpers selbst ebenfalls keine weiteren Angaben gemacht.

Prinzipiell könnte der Rohrkörper als nicht metallischer Rohrkörper ausgebildet sein.

Ein Verfahren zur erfindungsgemäßen Herstellung eines Rohrkörpers gemäß den vorstehend beschriebenen Ausführungsformen lässt sich besonders vorteilhaft dann durchführen, wenn der Rohrkörper als Gusskörper, insbesondere aus Eisenguss, hergestellt wird.

Insbesondere ist es dabei günstig, wenn der Rohrkörper als Schleudergusskörper hergestellt wird, da damit eine einfache und effiziente Möglichkeit zur Herstellung des Rohrkörpers besteht.

Um die bei Herstellung des Rohrkörpers die im Rohrkörper nach dem Schleudergussvorgang noch vorhandene Restwärme vorteilhaft ausnutzen zu können, ist vorzugsweise vorgesehen, dass der Rohrkörper im Zuge des Abkühlvorgangs mit der Auskleidung versehen wird, das heißt, dass die Temperatur des Rohrkörpers dazu ausgenutzt wird, in diesen die Auskleidung einzubringen, so dass kein separates oder nur ein geringfügiges Erhitzen des Rohrkörpers erforderlich ist, um im Rohrkörper die für das Einbringen der Auskleidung wünschenswerte Temperatur zu erhalten.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erfindungsgemäßes Rohr;
- Fig. 2: einen Längsschnitt durch ein erfindungsgemäßes Rohr bei bereits eingetretenem Brandfall;
- Fig. 3: einen Schnitt durch eine Kunststofffolie bildendes Matrix- material bei Raumtemperatur;
- Fig. 4: einen Schnitt ähnlich Fig. 3 durch das Matrixmaterial bei einer Temperatur zwischen 150°C und 200°C;

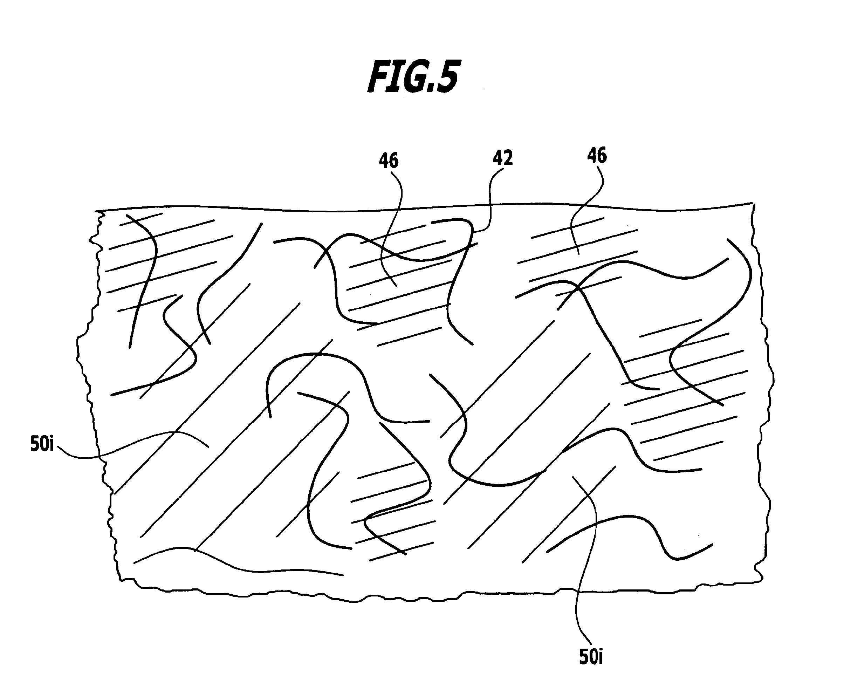

- Fig. 5: einen Schnitt gemäß Fig. 3 durch das Matrixmaterial bei einer Temperatur über 360°C;
- Fig. 6: einen Schnitt ähnlich Fig. 1 durch das Rohr beim Reinigen des- selben;
- Fig. 7: einen Längsschnitt durch einen als erfindungsgemäßes Expansionsorgan dienenden Blähdorn mit aufgezogenem Schlauch aus einer erfindungsgemäßen Kunststofffolie;
- Fig. 8: einen Schnitt ähnlich Fig. 7 bei in einen ersten Expansions- zustand expandiertem Expansionsorgan zur Fixierung des Schlauchs und Darstellung einer Plasmaaktivierung des Schlauchs;
- Fig. 9: eine Darstellung ähnlich Fig. 8 beim Aufbringen einer Klebstoff- schicht;
- Fig. 10: eine Darstellung ähnlich Fig. 8 bei einem fakultativen Aufheizen der Klebstoffschicht und des Schlauchs aus Kunststofffolie;
- Fig. 11: einen Schnitt längs Linie 11-11 in Fig. 10;

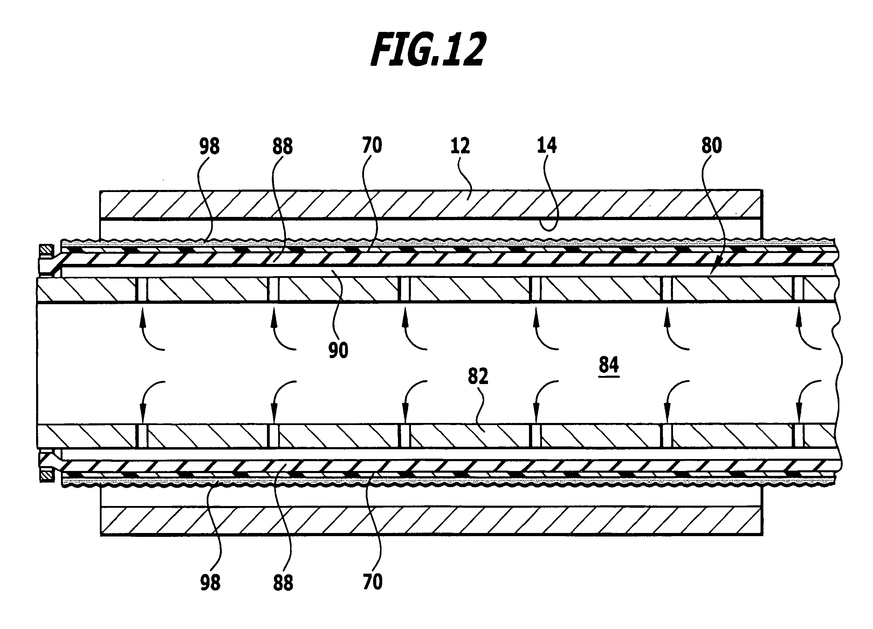

- Fig. 12: einen Schnitt ähnlich Fig. 1 mit in einen Rohrkörper einge- brachtem Expansionsorgan vor einer Expansion des Schlauchs gemäß dem ersten Ausführungsbeispiel eines erfindungs- gemäßen Verfahrens;
- Fig. 13: einen Schnitt ähnlich Fig. 12 nach Expansion des Expansions- organs und Anlegen des mit der Klebstoffschicht versehenen Schlauchs aus Kunststofffolie an einer Innenwandfläche des Rohrkörpers;
- Fig. 14: einen Schnitt ähnlich Fig. 11 bei Verwenden eines aus Kunst- stofffolie mit eingeprägten Falten;
- Fig. 15: einen Schnitt ähnlich Fig. 12 durch eine abgewandelte Aus- führungsform eines erfindungsgemäßen Expansionsorgans;
- Fig. 16: einen Schnitt ähnlich Fig. 13 durch eine weitere abgewandelte Ausführungsform eines erfindungsgemäßen Expansionsorgans im Verlauf einer Expansion des elastischen Mantels;
- Fig. 17: eine schematische Darstellung einer Vorrichtung zur Auf- heizung des Rohrkörpers;
- Fig. 18: einen Schnitt ähnlich Fig. 1 durch ein zweites Ausführungs- beispiel eines erfindungsgemäßen Rohrs;
- Fig. 19: einen Schnitt ähnlich Fig. 18 mit Darstellung eines Aufbringens eines Kunststofffilms;
- Fig. 20: einen Schnitt ähnlich Fig. 1 durch eine dritte Ausführungsform eines erfindungsgemäßen Rohrs;
- Fig. 21: eine Ansicht ähnlich Fig. 20 mit Darstellung einer Vorrichtung zur Fixierung des Kunststofffilms im Rohr;
- Fig. 22: eine Ansicht ähnlich Fig. 21 mit Darstellung der Vorrichtung zum Andrücken des Kunststofffilms an einer Stirnseite;
- Fig. 23: einen Schnitt ähnlich Fig. 1 durch eine vierte Ausführungsform eines erfindungsgemäßen Rohrs und

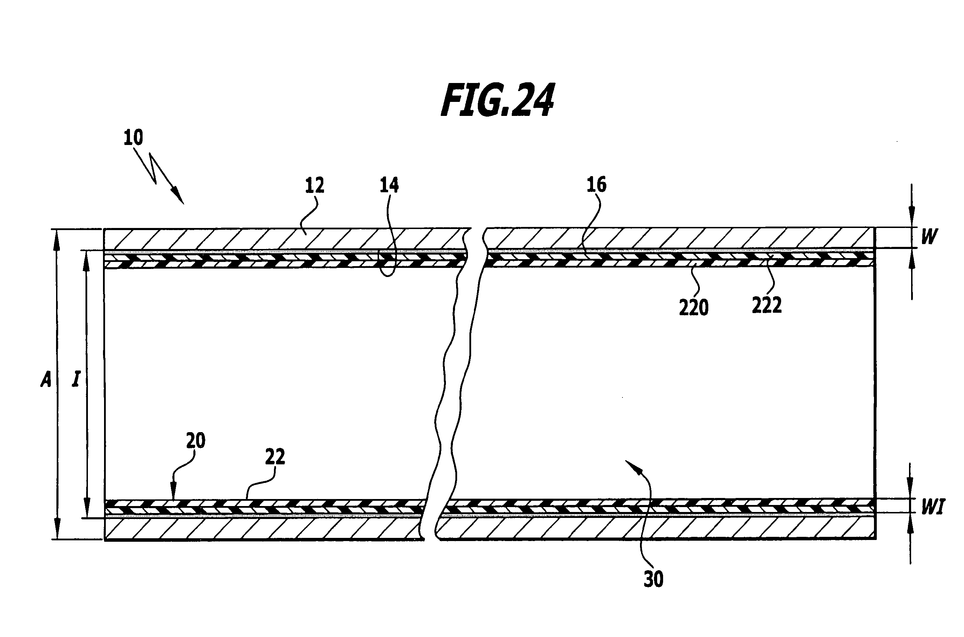

- Fig. 24: einen Schnitt ähnlich Fig. 1 durch eine fünfte Ausführungsform eines erfindungsgemäßen Rohrs.

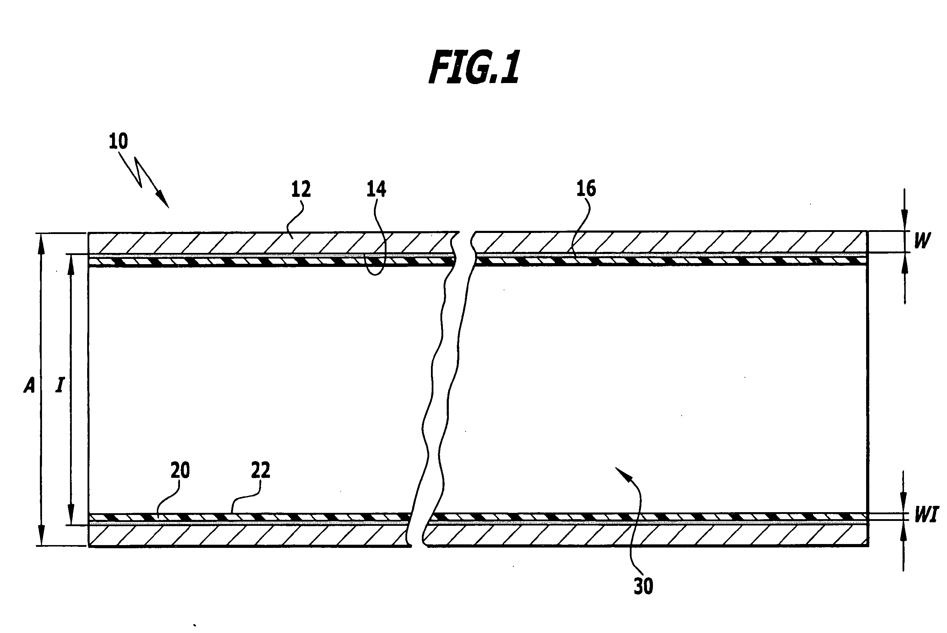

Ein in Fig. 1 dargestelltes Ausführungsbeispiel eines erfindungsgemäßen Rohrs 10 zur Führung von Flüssigkeiten, insbesondere zur Führung von privatem und/oder gewerblichem und/oder chemisch belastetem Abwasser, umfasst einen Rohrkörper 12, welcher beispielsweise aus Metall, vorzugsweise aus Metallguss hergestellt ist.

Bei einer bevorzugten Ausführungsform ist der Rohrkörper 12 als Eisenguss im Schleudergussverfahren mit einer Kokille hergestellt und weist eine im Wesentlichen gleichmäßige Wanddicke W auf, wobei ein Außendurchmesser A von einem Innendurchmesser der Kokille abhängig ist und ein Innendurchmesser I des Rohrkörpers 12 einerseits vom Außendurchmesser A und andererseits von der Menge des beim Schleudergussverfahren zugesetzten Gusseisen abhängig ist.

Üblicherweise werden derartige Rohrkörper 12 mit einer im Wesentlichen konstanten Wanddicke W hergestellt, allerdings gegebenenfalls variierendem Außendurchmesser A und entsprechend variierendem Innendurchmesser I.

An einer Innenwandfläche 14 des Rohrkörpers 12 ist mittels einer ausgehärteten Klebstoffschicht 16 eine Innenhülle 20 gehalten, wobei die Innenhülle 20 durch die Klebstoffschicht 16 vollflächig stoffschlüssig an der Innenwandfläche 14 fixiert ist.

Die Innenhülle 20 umschließt mit ihrer Innenfläche 22 einen als Ganzes mit 30 bezeichneten Durchlasskanal des Rohrs 10, der zur Führung von Flüssigkeiten, insbesondere zur Führung von privatem und/oder gewerblichem und/oder chemisch belastetem Abwasser geeignet ist.

Um diese Forderungen zu erfüllen ist die Innenhülle 20 vorzugsweise so ausgebildet, dass sie eine chemische Beständigkeit nach EN 877 und RAL-GZ 698/1 aufweist und im Übrigen ebenfalls beständig ist gegen Temperaturwechsel und/oder Heißwasser und/oder Salzsprühnebel nach ISO 7253 und/oder Korrosion durch biogene Schwefelsäure.

Darüber hinaus ist die Innenhülle 20 frei von Verstärkungsfasern und aus einem elastischen Material hergestellt, welches ein Elastizitätsmodul von kleiner 700 MPa aufweist, so dass sich die Innenhülle 20 Verformungen des Rohrkörpers 12, beispielsweise durch mechanische Belastungen thermische Dehnungen, anpassen kann.

Um andererseits eine ausreichende Festigkeit der Innenhülle 20 zu gewährleisten ist vorzugsweise das Kunststoffmaterial so ausgebildet, dass es einen Elastizitätsmodul von mehr als ungefähr 400 MPa aufweist.

Darüber hinaus ist die Innenhülle 20 so ausgebildet, dass sie insgesamt dem Rohr 10 Brandschutzeigenschaften nach DIN EN 1366-3, noch besser Brandschutzeigenschaften nach DIN EN 13501-1 verleiht.

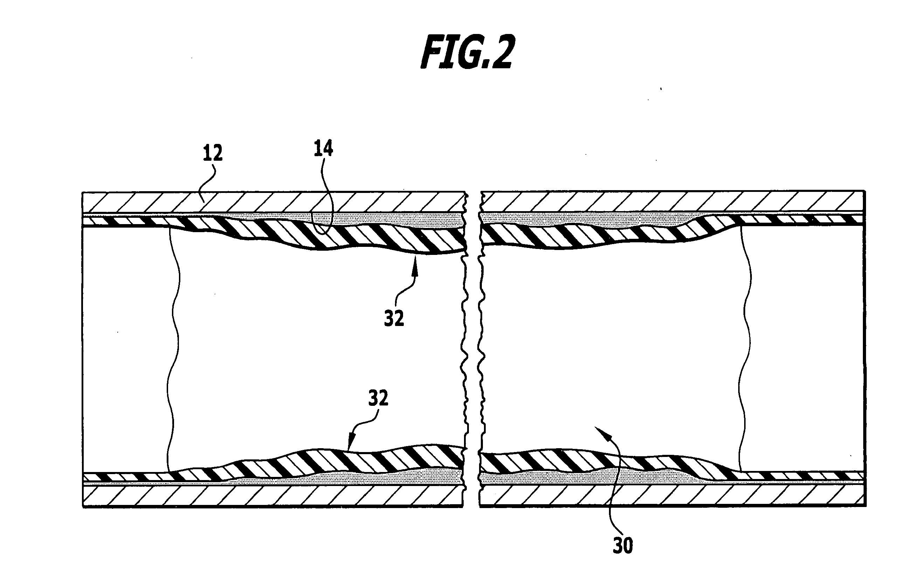

Das heißt, dass sich das Kunststoffmaterial der Innenhülle 20 wie ein intumeszierendes Material verhält und in einem Brandfall eine Volumenvergrößerung durchführt, die wie in Fig. 2 dargestellt, dazu führt, dass sich in dem Rohrkörper 12 ausgehend von der Innenwandfläche 14 ein verdickter Wandbereich 32 bildet.

Vorzugsweise ist der verdickte Wandbereich 32 derart ausgebildet, dass ein Abtropfen der Folie dadurch verhindert wird, dass infolge des Aufblähens der Folie aufgrund der entstehenden Blasen Druckspannungen an der Oberfläche der Folie entstehen, die ein Abfallen der Folie verhindern. Zusätzlich zu den Druckspannungen verhindert eine Viskositätserhöhung durch die vorhandenen Schichtsilikate ein Abtropfen der Folie.

Der verdickte Wandbereich 32 wird schließlich im Wesentlichen gebildet durch das pyrolysierte und aufgeblähte Kunststoffmaterial der Innenhülle 20, wobei außerdem auch noch die Klebstoffschicht 16 zumindest teilweise pyrolysiert, so dass der Wandbereich 32 fest an der Innenwandfläche 14 haftend in dem Rohrkörper 12 angeordnet ist, wie in Fig. 2 dargestellt.

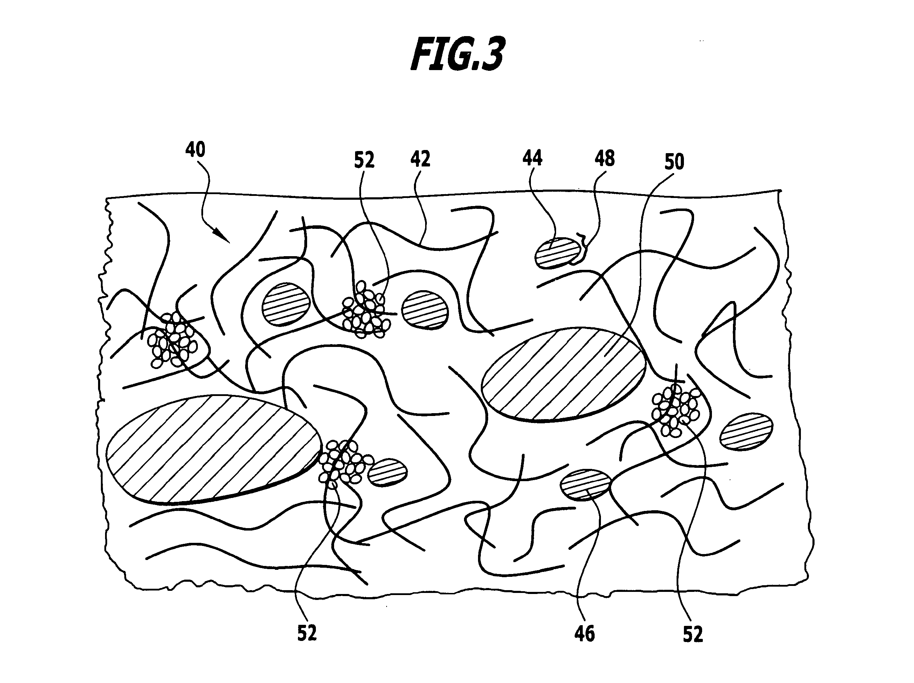

Hierzu umfasst das die Innenhülle 20 bildende Kunststoffmaterial, wie in Fig. 3 dargestellt, eine Materialmatrix 40 aus Polymermaterial 42, vorzugsweise Polyolefinen, insbesondere Polypropylen, das im Wesentlichen die mechanischen Eigenschaften und die chemische Beständigkeit, gewährleistet.

In diese Materialmatrix 40 aus Polymermaterial 42 sind viskositätserhöhende Partikel 44 eingelagert, die vorzugsweise Nanopartikel sind und eine poröse Schichtstruktur 46 aufweisen.

Diese viskositätserhöhenden Partikel 44 sind vorzugsweise aus Schichtsilikaten hergestellt, die unter zu Hilfenahme eines Haftvermittlers 48 in die Materialmatrix 40 aus Polymermaterial 42 eingelagert sind.

Durch diese viskositätserhöhenden Partikel 44 wird der Materialmatrix 40 die Eigenschaft verliehen, dass diese sich in Form der Innenhülle 20 tropfenbildungsfrei auf mehr als 360°C im Rohrkörper 12 erhitzen lässt, wobei die viskositätserhöhenden Partikel 44 dafür sorgen, dass insgesamt beim Aufheizen der Materialmatrix 40 ausgehend von Raumtemperatur eine maximale Viskositätsabnahme von weniger als einem Faktor 10 erfolgt und insgesamt beim Aufheizen der Materialmatrix 40 ausgehend von Raumtemperatur auf eine Temperatur über 360°C insgesamt eine Viskositätszunahme um mehr als einen Faktor 50 erfolgt, so dass insgesamt eine Tropfenbildung des ausgehend von Raumtemperatur mit zunehmender Temperatur erweichenden Polymermaterials 42 und somit ein Abtropfen desselben von der Innenfläche 22 des Rohrkörpers 12 verhindert wird und vielmehr das Polymermaterial 42 im Zuge der Temperaturerhöhung polymerisiert.

Darüber hinaus haben die viskositätserhöhenden Partikel 44 dann, wenn sie eine Schichtstruktur aufweisen, den Effekt, dass sie die Gasdichtigkeit des Polymermaterials 42 der Materialmatrix 40 vergrößern, so dass die in der Materialmatrix 40 entstehenden Gase zeitlich verzögert, d.h. über einen längeren Zeitraum, aus der Materialmatrix 40 austreten und im Übrigen insbesondere in Verbindung mit dem intumeszierende Eigenschaften aufweisenden Kunststoffmaterial eine Volumenaufblähung der Materialmatrix 40 zur Folge haben.

Zum Erreichen der intumeszierenden Eigenschaften sind in der Materialmatrix 40 intumeszierend wirkende Partikel 50 eingelagert, die ebenfalls bei einer Erhöhung der Temperatur ausgehend von Raumtemperatur bis zu einer Temperatur über ungefähr 360°C eine drastische Volumenvergrößerung der Materialmatrix 40 bewirken, um den Verschlusskörper 32 zu erzeugen.

Derartige intumeszierend wirkende Partikel 50 können beispielsweise Blähgraphit oder Ammoniumpolyphosphat oder eine Mischung aus beidem, beispielsweise im Verhältnis von ungefähr 4: 1, sein. Die Wirkung der intumeszierenden Partikel 50 besteht darin, dass diese bei Temperaturerhöhung ausgehend von Raumtemperatur auf über 360°C einen Blähgrad von mehr als 300% aufweisen, so dass insgesamt die Materialmatrix 40 eine Volumenvergrößerung von ungefähr 300% ausführt.

Die Funktion der intumeszierend wirkenden Partikel 50 ist darin begründet, dass diese beispielsweise im Fall von Blähgraphit zwischen den Graphitebenen interkalierte Fremdmoleküle, wie beispielsweise Stickstoff und/oder Schwefel, aufweisen, die bei zunehmender Temperatur ausgasen und zu der Expansion der Graphitschichten und somit zur Blasenbildung führen.

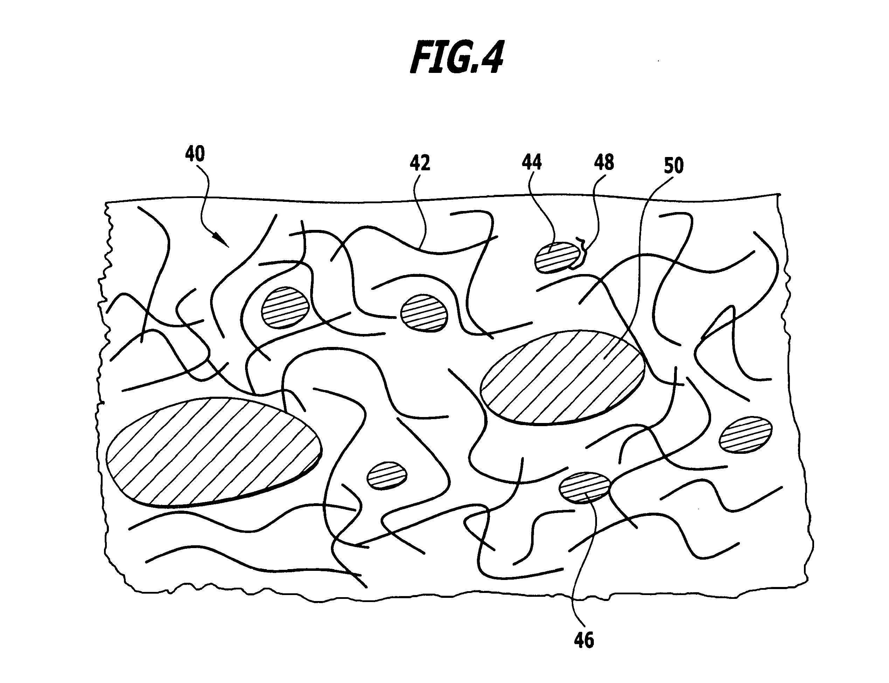

Hilfreich bei der Volumenexpansion der Materialmatrix 40 aufgrund der Blasenbildung durch die intumeszierend wirkenden Partikel 50 wirken dabei auch noch die viskositätserhöhenden Partikel 44, die - wie bereits beschrieben - die Gasdichtigkeit der Materialmatrix 40 verbessern und dadurch bewirken, dass die sich in der Materialmatrix 40 bildenden Gase zumindest verzögert durch die Blasenwandung der sich bildenden Blasen hindurchtreten, so dass sich insgesamt die Barrierewirkung der Materialmatrix 40 verstärkt. Insbesondere bewirkt bei der Materialmatrix 40 eine Temperaturerhöhung von Raumtemperatur auf eine Temperatur in der Größenordnung von über 160°C, dass die noch in Fig. 3 dargestellten teilkristallinen Bereiche 52 des Polymermaterials sich auflösen und somit insbesondere das Polymermaterial 42, wie in Fig. 4 dargestellt, nur noch eine rein amorphe Struktur zeigt, in welcher die viskositätserhöhenden Partikel 44 und die intumeszierend wirkenden Partikel 50 eingelagert sind.

Bei einer weiteren Temperaturerhöhung auf eine Temperatur von in der Größenordnung von über 320°C erfolgt nun die Expansion des intumeszierend wirkenden Partikel 50 zu Bereichen 50i in der sich zersetzenden amorphen Struktur des Polymermaterials 42, so dass die Materialmatrix 40 unter Streckung des sich zersetzenden Polymermaterials 42, bedingt durch die Volumenerweiterung der intumeszierend wirkenden Partikel 50 expandiert, wobei die viskositätserhöhenden Partikel 44 eine Barrierewirkung für sich in der Materialmatrix 40 ausbildende Gase bewirken.

Insgesamt trägt die Volumenvergrößerung der Materialmatrix 40 durch die intumeszierend wirkenden Partikel 50 auch zu einer Reduzierung der Wärmeleitfähigkeit bei.

Eine beispielhafte bevorzugte Zusammensetzung der Materialmatrix 40 sieht dabei vor, dass bei dieser das Polymer Polypropylen mit einem Anteil von zwischen ungefähr 70 Gewichts-% und ungefähr 85 Gewichts-% vorliegt, dass die intumeszierend wirkenden Partikel 50 mit einem Anteil zwischen ungefähr 25 Gewichts-% und ungefähr 5 Gewichts-% vorliegen, und dass die viskositätserhöhenden Partikel 44 mit einem Anteil zwischen ungefähr 3 Gewichts-% und ungefähr 1 Gewichts-% vorliegen, wobei diese viskositätserhöhenden Partikel zur Einlagerung in der Materialmatrix 40 vorzugsweise mit einem Haftvermittler zugegeben werden, der mit einem Anteil zwischen ungefähr 5 Gewichts-% und ungefähr 2 Gewichts-% in der Materialmatrix 40 vorliegt.

Bei einem Ausführungsbeispiel weist dabei die die Materialmatrix 40 aufweisende Innenhülle 20 eine Wanddicke WI auf, die im Bereich zwischen ungefähr 0,2 mm und ungefähr 0,5 mm liegt.

Diese Wanddicke WI und somit die Dicke der Materialmatrix 40 ist ausreichend, um bei einem Erhitzen der Innenhülle 20 auf eine Temperatur von über 360°C die Ausbildung des Verschlusskörpers 32 mit den beschriebenen Eigenschaften zu erreichen.

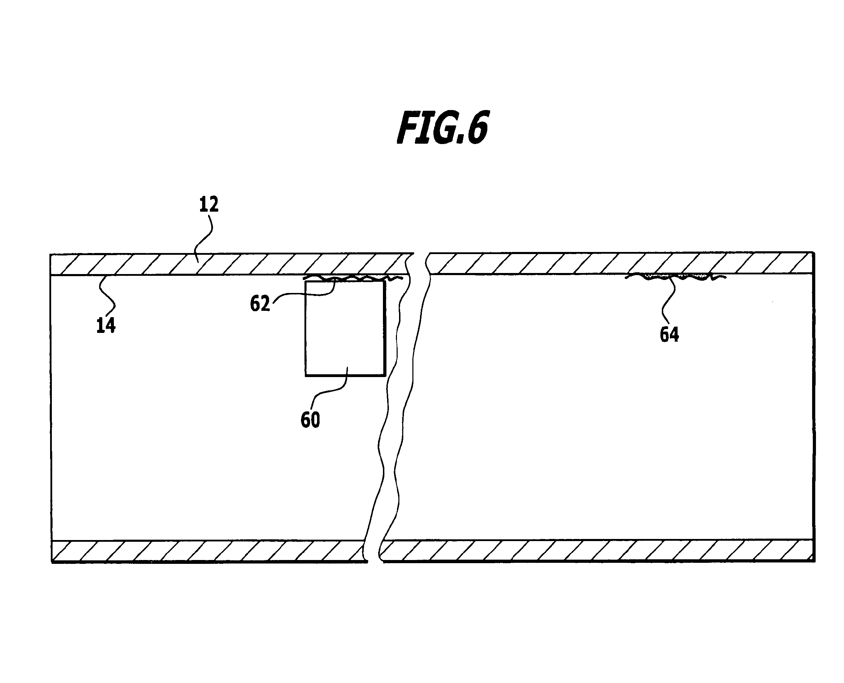

Zur Herstellung eines erfindungsgemäßen Rohrs 10 wird, wie in Fig. 6 dargestellt, der Rohrkörper 12 auf seiner Innenwandfläche 14 mechanisch, beispielsweise durch Bürsten mit einer Bürste 60, um diesen von Verunreinigungen, beispielsweise Schlackenresten 62 und/oder Staub 64 zu befreien, und somit eine für die Klebstoffschicht 16 haftfähige Innenwandfläche 14 zu schaffen.

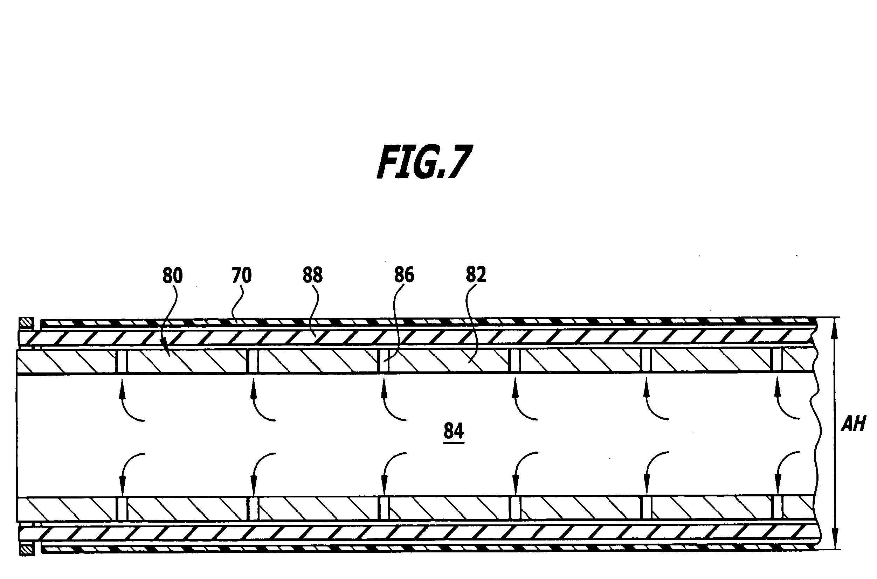

Zum Einsetzen der Innenhülle 20 in den vorstehend beschriebenen gereinigten Rohrkörper 12 wird, wie in Fig. 7 dargestellt, ein die spätere Innenhülle 20 bildendes, beispielsweise von einem Extruder extrudiertes nahtloses Schlauchstück 70 einer Blasfolie oder ein aus geschnittener und überlappend gelegter Folie mit einer Siegelnaht im Überlappungsbereich hergestelltes Schlauchstück, dessen Außendurchmesser AH geringer ist als der Innendurchmesser I des Rohrkörpers 12 auf einen als Ganzes mit 80 bezeichneten Blasdorn aufgezogen, welcher ein Trägerrohr 82 aufweist, das einen Innenraum 84 umschließt, in welchem ein Medium, beispielsweise ein Gas, angeordnet ist, das durch eine externe Pumpe unter Druck gesetzt werden kann und durch Öffnungen 86 im Trägerrohr 82 hindurchtreten kann, um einen Mantel 88 aus elastischem Material radial zum Trägerrohr 82 aufzuweiten.

Der elastische Mantel 88 besteht dabei beispielsweise aus einem gummielastischen Schlauchkörper, der sich unter Abheben vom Trägerrohr 82 radial expandieren lässt.

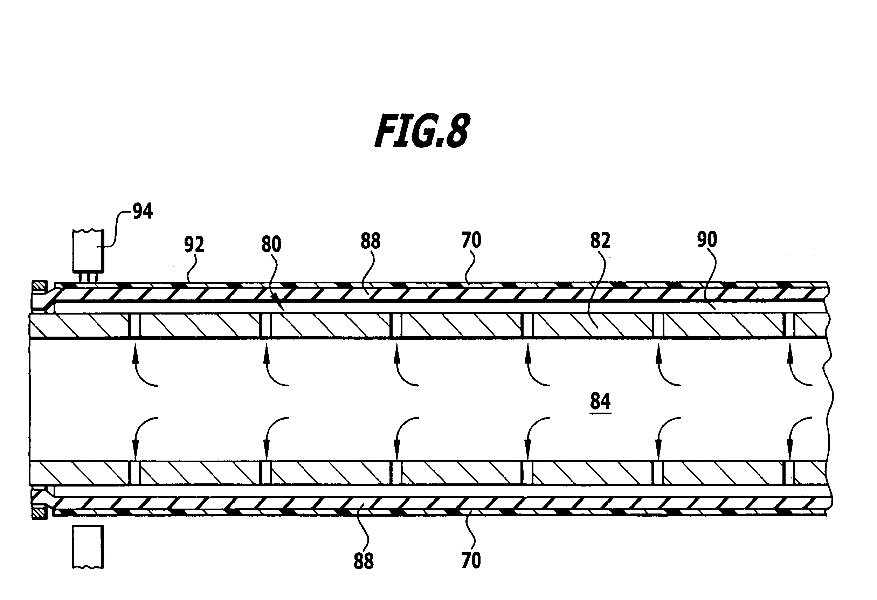

Auf diesen Mantel 88 wird das Schlauchstück 70 aufgezogen, wie in Fig. 7 dargestellt, und durch Expandieren des Mantels 88 bis zu einer ersten Expansionsstufe, dargestellt in Fig. 8, fixiert.

In dieser ersten expandierten Stellung des Mantels 88 liegt zwischen dem Trägerrohr 82 und dem Mantel 88 ein Zwischenraum 90, so dass der Mantel 88 relativ zum Trägerrohr 82 durch ein Medienpolster, welches sich in dem Zwischenraum 90 bildet, abgestützt ist.

In dieser, in Fig. 8 dargestellten fixierten Position des Schlauchstücks 70 erfolgt eine Plasmaaktivierung einer Außenseite 92 des Schlauchstücks 70 durch eine ein Plasma erzeugende Düse 94, welches dazu führt, dass an der Außenseite 92 des Schlauchstücks 70 die Polymerketten der Materialmatrix 40 aktiviert werden, das heißt, es entstehen im Bereich der Außenseite 92 durch Aktivierung der obersten Schicht der Polymerketten Kettenbruchstücke, an die sich ionisierte Moleküle anlagern, die eine verbesserte Haftung eines aufzutragenden Klebstoffs ermöglichen.

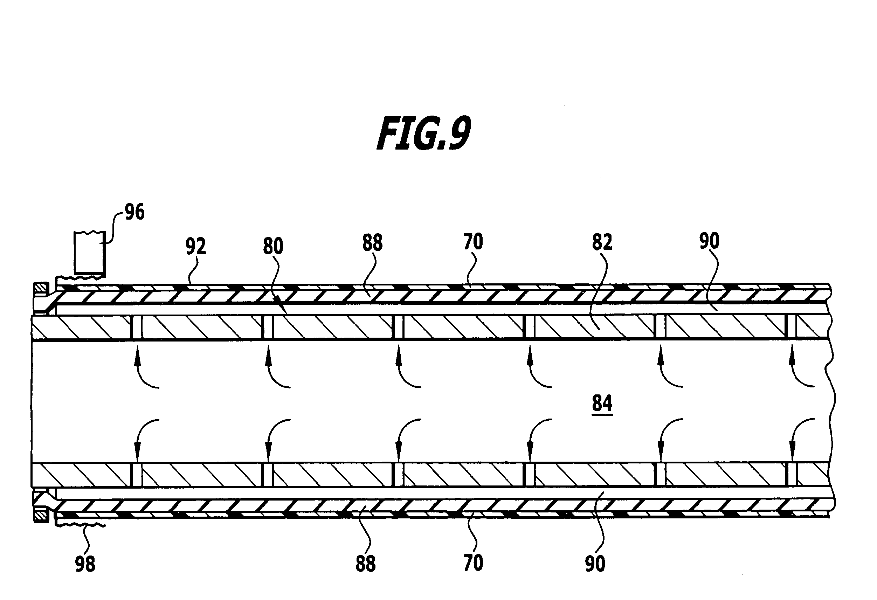

Nach der Plasmaaktivierung der Außenseite 92 erfolgt mit einem Auftragkopf 96, wie in Fig. 9 dargestellt, das Auftragen einer Klebstoffschicht 98 wobei das Auftragen der Klebstoffschicht 98 beispielsweise durch Sprühen oder Gießen oder Walzen erfolgen kann.

Eine günstige Lösung sieht vor, das Schlauchstück 70 vor dem Auftragen der Klebstoffschicht 98, beispielsweise bereits auf dem Blasdorn 80 zu erwärmen oder aufzuheizen. Hierzu lassen sich beispielsweise Infrarotstrahler einsetzen, wobei gleichzeitig das Schlauchstück 70 dem Blasdorn 80 relativ zu den Strahlern gedreht wird.

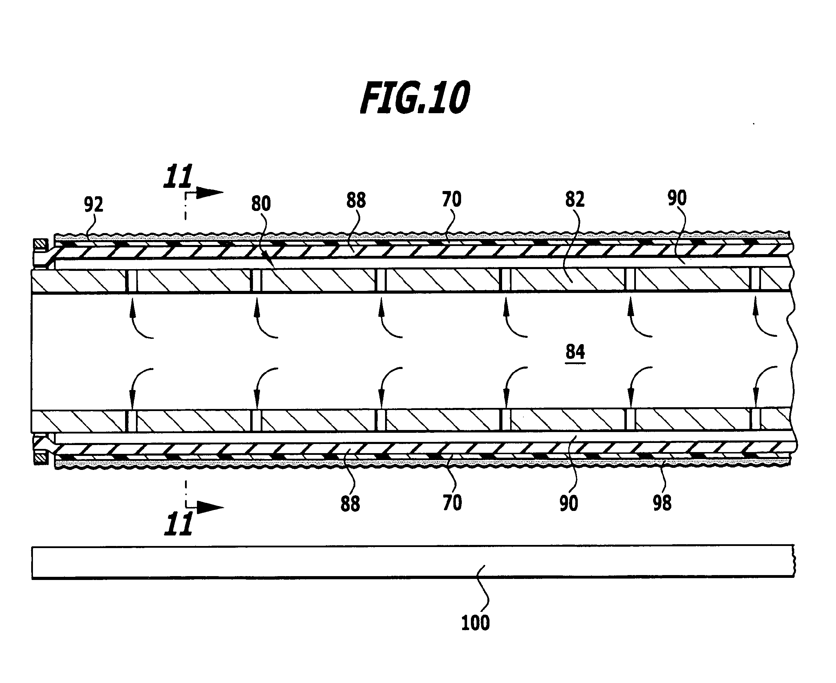

Optional besteht, wie in Fig. 10 dargestellt, noch die Möglichkeit, die aufgetragene Klebstoffschicht 98 mitsamt dem Schlauchstück 70 durch eine Heizeinrichtung 100 aufzuheizen, sofern dies notwendig sein sollte, um eine geeignete Temperatur des Systems aus Klebstoffschicht 98 und Schlauchstück 70 für das Verbinden derselben mit dem Rohrstück 12 zu erhalten.

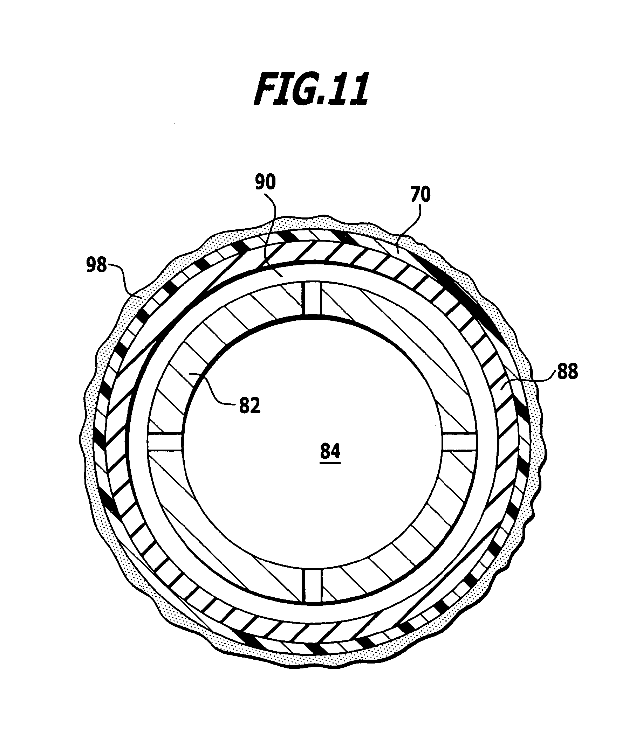

Das auf dem Blasdorn 80 sitzende und vollflächig auf seiner Außenseite 92 mit der Klebstoffschicht 98 versehene Schlauchstück 70, dargestellt in Fig. 10 und 11, wird gemäß dem ersten Ausführungsbeispiel mit dem Blasdorn 80 in den Rohrkörper 12 eingeführt, welcher beispielsweise noch eine Temperatur von zwischen 150°C und 250°C, beispielsweise 160°C, aufweist. Dabei ist der Durchmesser des Mantels 88 in der ersten Expansionsstellung nach wie vor so, dass das auf diesem fixierte Schlauchstück 70 mit der Klebstoffschicht 98 in ausreichendem Abstand von der Innenwandfläche 14 des Rohrkörpers 12 verläuft, so dass sich das Schlauchstück 70 mit der darauf angeordneten Klebstoffschicht 98 berührungsfrei mit der Innenwandfläche 14 in den Rohrkörper 12 einführen lässt.

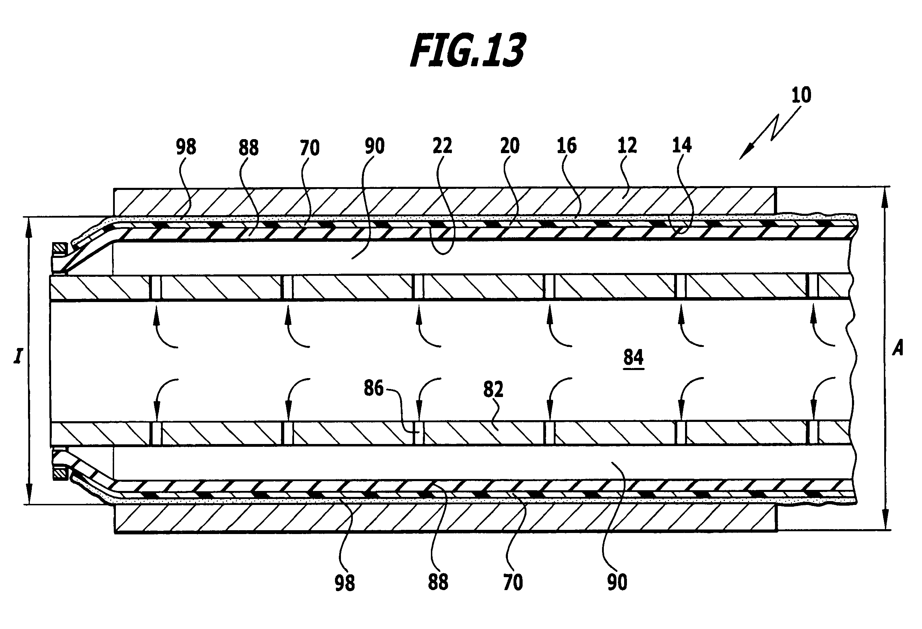

Danach erfolgt, wie in Fig. 13 dargestellt, eine weitere Expansion des Mantels 88, die dazu führt, dass das Schlauchstück 70 mit der Klebstoffschicht 98 gegen die Innenwandfläche 14 gepresst werden und durch den expandierten Mantel 88 mit Druck in Anlage an der Innenwandfläche 14 gehalten werden.

Da die Klebstoffschicht 98 ein Klebersystem auf Epoxidharz-Basis umfasst, lässt sich aufgrund der Temperatur des Rohrkörpers 12 bei nennenswert kurzer Anpressdauer von mehr als 30 Sekunden maximal 60 Sekunden seitens des Mantels 88 des Blähdorns 80 eine ausreichend große Haftfestigkeit der Klebstoffschicht 98 erreichen, das heißt, dass in der Klebstoffschicht 98 eine Vernetzung im Bereich von ungefähr 60% bis ungefähr 80% der reaktiven Polymerketten stattfindet. Die Haftfestigkeit manifestiert sich dabei in einem Anstieg der Viskosität um ungefähr 10⁴ Pascal, noch besser um ungefähr 10⁵ Pascal, so dass der Absolutwert der Viskosität ebenfalls ungefähr 10⁵ Pascal beträgt. Die Haftfestigkeit der Klebstoffschicht 98 ist ausreichend, um das Schlauchstück 70 vollflächig an der Innenwandfläche 14 zu fixieren, so dass das Anpressen des Schlauchstücks 70 mit Hilfe des Mantels 88 des Blasdorns 80 für eine weitere Fixierung des Schlauchstücks 70 an der Innenwandfläche 14 nicht mehr nötig ist und somit im Innenraum 84 der Druck abgebaut werden kann, so dass der Mantel 88 in seine, in Fig. 7 dargestellte Ausgangsstellung zurückgeht und der Blasdorn 80 in dieser Stellung aus dem Rohrstück 12 herausgezogen werden kann.

Mit zunehmender Vernetzung der Klebstoffschicht 98 geht diese in die Klebstoffschicht 16 über, die im Wesentlichen vollständig vernetzt ist und somit den Teil des Schlauchstücks 70, der zwischen Enden des Rohrstücks 12 liegt als Innenhülle 20 in dem Rohrkörper 12 fixiert hält.

Da die das Schlauchstück 70 bildende Materialmatrix 40 aus Polymermaterial 42 aufgrund der in dieser enthaltenen viskositätserhöhenden Partikel 44 und der intumeszierend wirkenden Partikel 50 einen hohen Füllgrad aufweist, ist deren Dehnbarkeit beim Einbringen derselben und Anlegen derselben an der Innenwandfläche 14 des Rohrkörpers 12 begrenzt.

Insbesondere wenn hinsichtlich des Innendurchmessers I des Rohrkörpers 12 mit erheblichen Toleranzen zu rechnen ist und auch hinsichtlich der Geradheit des Rohrkörpers 12 mit Toleranzen zu rechnen ist, ist das Schlauchstück 70 mit gegenüber dem Innendurchmesser I nennenswert geringerem Durchmesser in den Rohrkörper 12 einzubringen, um ein sicheres und berührungsloses Einführen des Schlauchstücks 70 mit der darauf angeordneten Klebstoffschicht 98 zu ermöglichen.

Dies hat wiederum zur Folge, dass ausgehend von dem gegenüber dem Innendurchmesser I nennenswert geringeren Durchmesser eine diese Durchmesserdifferenz überwindende nennenswerte Expansion des Schlauchstücks 70 erforderlich ist, um dieses mittels der Klebstoffschicht 98 an der Innenwandfläche 14 fixieren zu können.

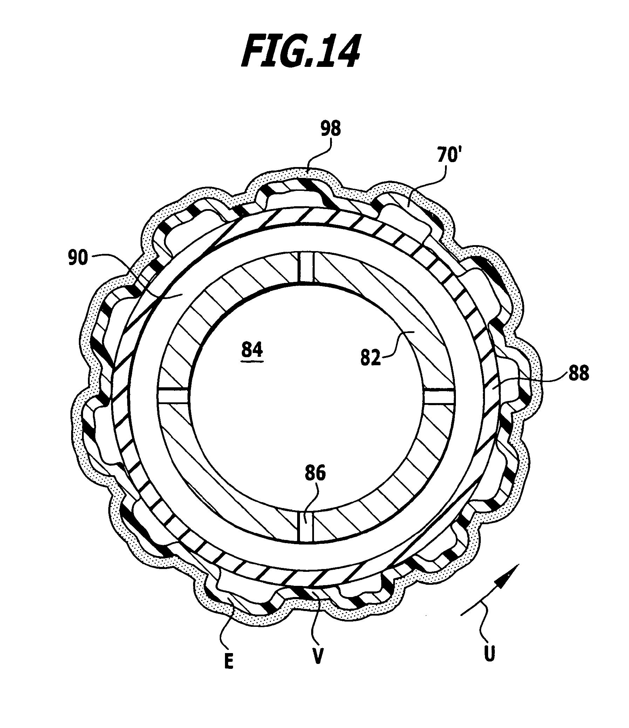

Aus diesem Grund ist bei einem zweiten Ausführungsbeispiel eines erfindungsgemäßen Verfahrens vorgesehen, dass, wie in Fig. 14 dargestellt, das Schlauchstück 70 durch Thermoformen in Umfangsrichtung U aufeinanderfolgende Erhebungen E aufweist, die sich mit Vertiefungen V abwechseln, wobei sich die Erhebungen E und die Vertiefungen V jeweils über die gesamte Länge des auszukleidenden Rohrkörpers 12, vorzugsweise über diese hinaus, erstrecken.

Die Erhebungen E und die Vertiefungen V im Schlauchstück 70 sind dabei beispielsweise durch ein Thermoformprozess nach der Extrusion des Schlauchstücks 70 eingeformt, so dass diese bei der Expansion des Mantels 88 in den ersten Expansionszustand erhalten bleiben und somit eine Fixierung des Schlauchstücks 70 mit in diesem vorhandenen Erhebungen E und Vertiefungen V auf dem Blasdorn 80 möglich ist.

Erst bei maximaler Expansion des Mantels 88 innerhalb des Rohrkörpers 12 verschwinden, insbesondere auch aufgrund der Aufheizung des Schlauchstücks 70 durch den auf eine Temperatur zwischen ungefähr 150°C und ungefähr 250°C erwärmten Rohrkörper 12, das Schlauchstück 70, die Erhebungen E und Vertiefungen V, so dass sich das Schlauchstück 70' dann mit faltenfreier Oberfläche und im Wesentlichen vollflächig an der Innenwandfläche 14 des Rohrkörpers 12 anlegen lässt, wobei die Klebstoffschicht 98 in der beschriebenen Art und Weise wirkt, insbesondere während des Anpressens des Schlauchstücks 70' an die Innenwandfläche 14 den Gelpunkt erreicht und somit soweit vernetzt, dass das Schlauchstück 70' fest an der Innenwandfläche 14 des Rohrkörpers 12 gehalten wird.

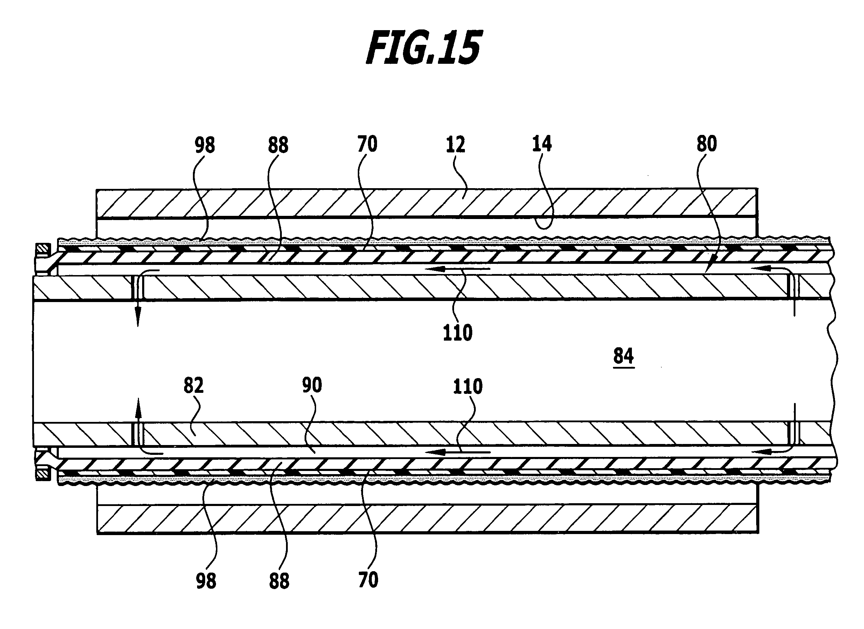

In Abwandlung des vorstehend beschriebenen Verfahrens ist bei einer in Fig. 15 dargestellten Variante desselben eine Temperierung des das Schlauchstück 70 tragenden elastischen Mantels 88 dadurch vorgesehen, dass der Zwischenraum 90 zwischen dem Trägerrohr 82 und dem elastischen Mantel 88 ständig von einem Strom 110 eines unter Druck stehenden Mediums durchströmt ist, und dadurch temperierbar ist, um damit auch den elastischen Mantel 88 und somit das auch auf diesem aufliegende Schlauchstück 70 zu temperieren, das heißt auf einer im Wesentlichen konstanten Temperatur zu halten.

Damit besteht die Möglichkeit, den elastischen Mantel 88 bei zu hoher Temperatur zu kühlen und bei zu niederer Temperatur aufzuheizen, um beispielsweise zu verhindern, dass sich das Schlauchstück 70 unvorhergesehenerweise stark aufheizt oder unvorhergesehenerweise abkühlt. Folglich ist auch die Klebstoffschicht 98 temperierbar, und kann somit auf einer im Wesentlichen konstanten Temperatur gehalten werden.

Damit ist die Prozesssicherheit beim Fixieren des Schlauchstücks 70 an einer Innenwandfläche 14 des Rohrkörpers 12 wesentlich verbessert.

Alternativ dazu ist es denkbar, im Trägerrohr 82 Kanäle vorzusehen, die ein temperierendes Medium führen.

Eine weitere Alternative sieht vor, im Mantel 88 temperierende Elemente, wie Peltierelemente vorzusehen.

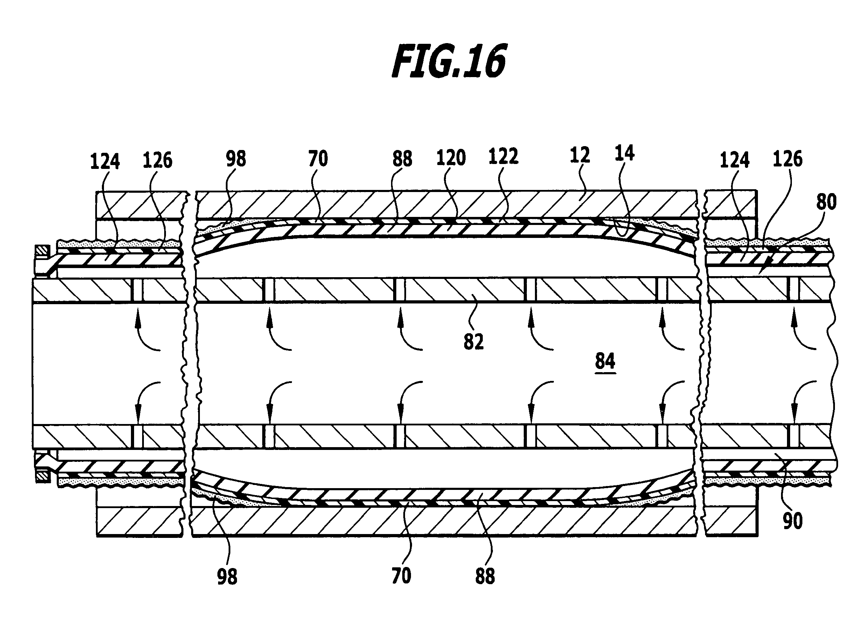

Bei einer weiteren Variante des vorstehend beschriebenen Verfahrens ist, wie in Fig. 16 dargestellt, der elastische Mantel 88 so ausgebildet, dass dieser bei Erhöhung des Drucks in dem Zwischenraum 90 nicht über seine ganze Länge gleichmäßig expandiert, sondern zunächst in einem mittigen Bereich 120 expandiert, bis das auf diesem mittigen Bereich 120 liegende Schlauchstück 70 mit dem entsprechenden mittigen Bereich 122 an der Innenwandfläche 14 des Rohrkörpers 12 anliegt und dann, nachdem eine weitere Expansion des elastischen Mantels 88 durch den Rohrkörper 12 verhindert ist, sich der elastische Mantel 88 beiderseits des mittigen Bereichs zunehmend an der Innenwandfläche 14 des Rohrkörpers 12 anlegt, so lange, bis der elastische Mantel 88 auch mit einem äußeren Bereich 124 einen entsprechenden äußeren Bereich 126 des Schlauchstücks 70 an der Innenwandfläche 14 des Rohrkörpers 12 anlegt.

Dieses Verfahren hat den großen Vorteil, dass damit Lufteinschlüsse zwischen der Innenwandfläche 14 des Rohrkörpers 12 und dem Schlauchstück 70 verhindert werden können, da die Luft zwischen dem Schlauchstück 70 und der Innenwandfläche des Rohrkörpers 12 ausgehend von dem mittigen Bereich 122 des Schlauchstücks 70 sukzessive in Richtung von Enden des Rohrkörpers 12 bewegt wird und dabei aus dem Raum zwischen dem Schlauchstück 70 und der Innenwandfläche 14 des Rohrkörpers 12 entweichen kann.

Im Zusammenhang mit der voranstehenden Beschreibung des Verfahrens wurde beschrieben, dass der Rohrkörper 12 beim Einführen des Blasdorns 80 mit dem auf diesem angeordneten Schlauchstück 70 und der darauf angeordneten Klebstoffschicht 98 eine Temperatur zwischen 150°C und 250°C aufweisen soll.

Hierbei wurden jedoch hinsichtlich der Aufheizung des Rohrkörpers 12 keine weiteren Angaben gemacht.

Prinzipiell kann der Rohrkörper 12 dabei in beliebiger Art und Weise aufgeheizt werden.

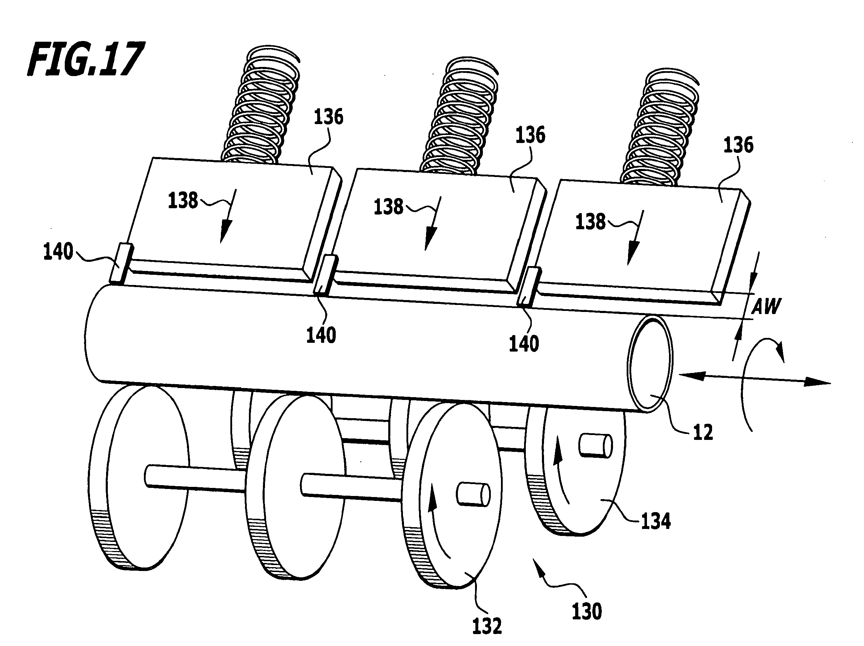

Eine besonders vorteilhafte Form der Aufheizung des Rohrkörpers 12 ist in Fig. 17 dargestellt.

Dabei wird der Rohrkörper 12 auf einer Stützeinrichtung 130 angeordnet, welche rotierende Rollensätze 132 und 134 aufweist, die den Rohrkörper 12 einerseits abstützen und andererseits aufgrund ihrer Rotation ebenfalls rotieren lassen.

Die Aufheizung des Rohrkörpers 12 erfolgt dabei durch Wirbelstromgeneratormodule 136, die so aufgebaut sind, dass sie in dem Rohrkörper 12 Wirbelströme erzeugen, welche dann aufgrund des elektrischen Widerstandes des Materials des Rohrkörpers 12 zu einer Aufheizung desselben führen.

Um die Erzeugung der Wirbelströme im Rohrkörper 12 möglichst effizient zu gestalten ist vorzugsweise vorgesehen, dass die Wirbelstromgeneratormodule 136 in einer Zustellrichtung 138 bewegbar sind und so beaufschlagt werden, dass sie stets in einem gewünschten Idealabstand AW von dem Rohrkörper 12 angeordnet sind.

Hierzu sind vorzugsweise Abstandssensoren oder Abstandsfühler 140 vorgesehen, welche die einzelnen Wirbelstromgeneratormodule 138 in dem gewünschten Abstand AW zum Rohrkörper 12 positioniert halten.

Durch die Wirbelstromgeneratormodule 136 besteht somit eine einfache und effiziente Möglichkeit, den Rohrkörper 12 auf eine gewünschte Temperatur aufzuheizen.

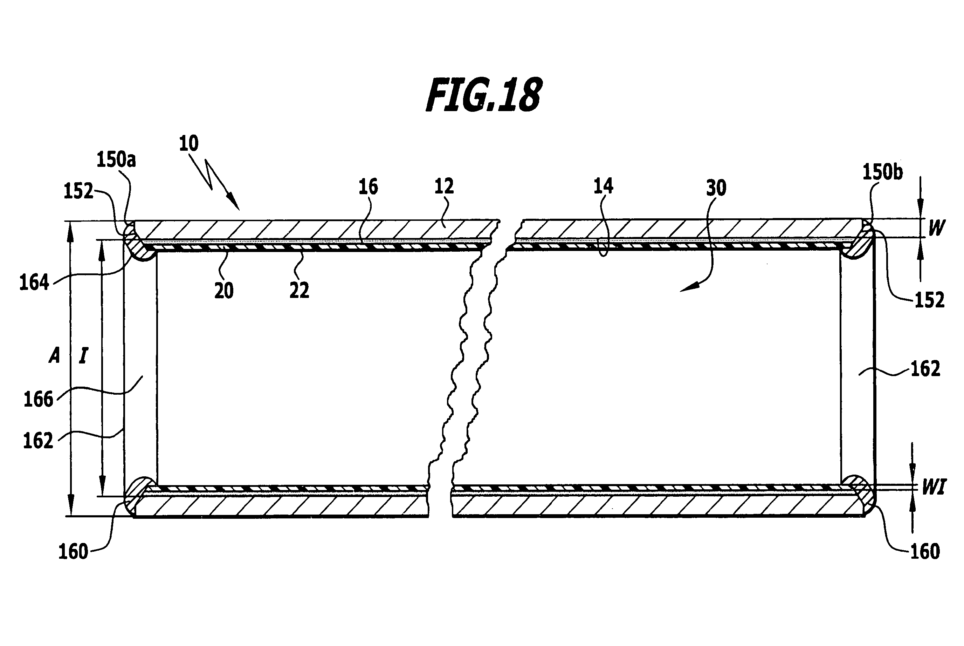

Bei einem weiteren Ausführungsbeispiel eines erfindungsgemäßen Rohrs, dargestellt in Fig. 18 sind Stirnseiten 150a und 150b des Rohrkörpers 12 mit zur Innenwandfläche 14 hin gebrochenen Kanten 152 versehen von einem Kunststofffilm 160 überdeckt, der in diesem Fall durch eine aufgetragene Schicht 162 von Kunststoffpartikeln gebildet ist, wobei sich die Schicht 162 einerseits über die Stirnseiten 150a und 150b mit einem Bereich 164 erstreckt und andererseits mit einem Überlappungsbereich 166 die Innenhülle 120 auf ihrer Innenfläche 22 noch übergreift, um mit der Innenhülle 20 einen dichten Abschluss zu bilden.

Der Kunststofffilm 160 ist dabei vorzugsweise aus demselben oder einem ähnlichen Kunststoffmaterial hergestellt wie die Innenhülle 20, so dass sich der die Innenhülle 20 übergreifende Überlappungsbereich 66 des Kunststofffilms 160 innig mit der Innenhülle 20 verbindet.

Der Kunststofffilm 160 stellt einen Schutz der Stirnseiten 150a und 150b des Rohrkörpers dar, so dass damit die durch die Innenhülle 20 erreichten Vorteile der erfindungsgemäßen Lösung auch im Bereich der Stirnseiten 150a und 150b erhältlich sind.

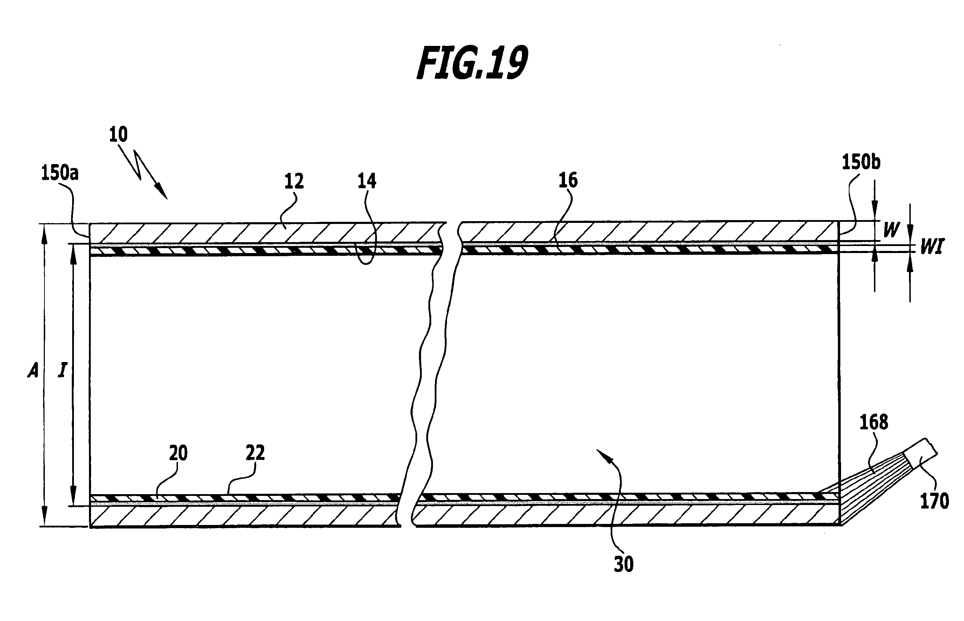

Der Kunststofffilm 160 gemäß Fig. 18 lässt sich beispielsweise durch ein in Fig. 19 dargestelltes Flammspritzverfahren auf die Stirnseiten 150a und 150b auftragen, wobei in einem Spritzstrahl 168 von einer Flammspritzeinrichtung 170 versprühte und thermisch aufgeheizte Kunststoffpartikel in Richtung der Stirnseiten 150a bzw. 150b verspritzt werden, dass die angeschmolzenen Kunststoffpartikel auf den Stirnseiten 150a bzw. 150b des Rohrkörpers 12 sowie im Überlappungsbereich 66 auf der Innenfläche 22 der Innenhülle 20 einen zusammenhängenden Kunststofffilm bilden.

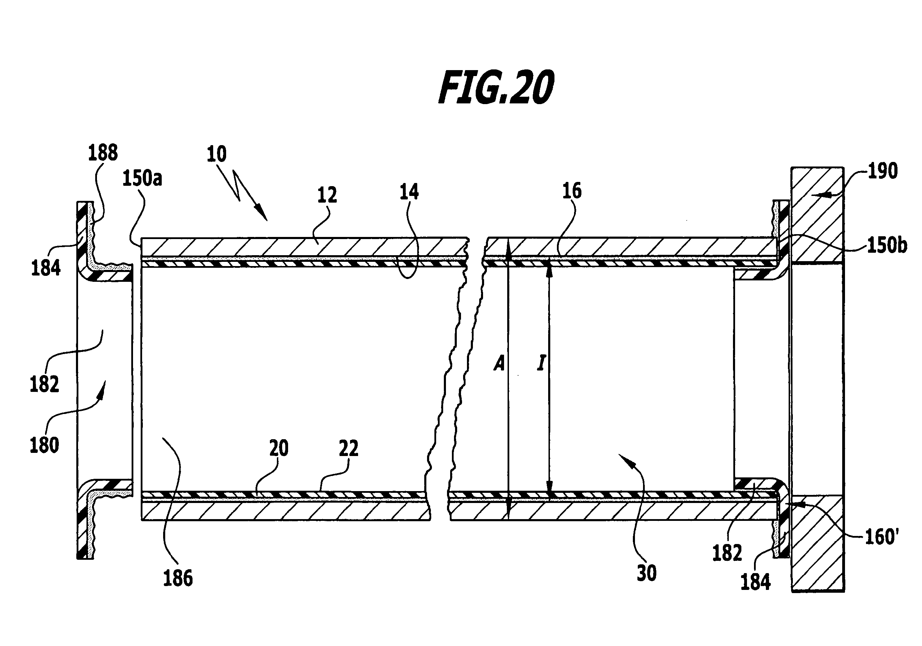

Bei einem dritten Ausführungsbeispiel des erfindungsgemäßen Rohres, dargestellt in Fig. 20, wird zum Schutz der Stirnseiten 150a, 150b des Rohrkörpers 12 im Bereich der Stirnseiten 150a, 150b vorzugsweise bei gebrochenen Kanten 152 ein vorgeformtes Folienstück 180 eingesetzt, welches einen hülsenförmigen Abschnitt 182 sowie einen radial nach außen überstehenden Randabschnitt 184 aufweist, wobei der hülsenförmige Abschnitt 182 mit einem Endbereich 186 der Innenhülle 20 überlappt und mittels einer auf dieser außenseitig aufgetragenen Kleberschicht 188 mit der Innenhülle 20 an deren Innenfläche 22 verklebbar oder verschweißbar ist.

Der Randabschnitt 184 ist beispielsweise aufgrund der Kleberschicht 188 mit den Stirnseiten 150a, 150b des Rohrkörpers 12 verklebbar, so dass mittels des Randabschnitts 184 ein Kunststofffilm 160' ein Schutz der Stirnseiten 150a, 150b des Rohrkörpers 12 erhältlich ist.

Um den Randbereich 184 zum Aushärten der Kleberschicht 188 gegen die Stirnseiten 150a, 150b anpressen zu können, ist vorzugsweise ein beheizter Druckring 190 einsetzbar, welcher in Richtung der Stirnseiten 150a, 150b mit Druck beaufschlagbar ist, um den Randbereich 184 an den Stirnseiten 150a, 150b anzupressen.

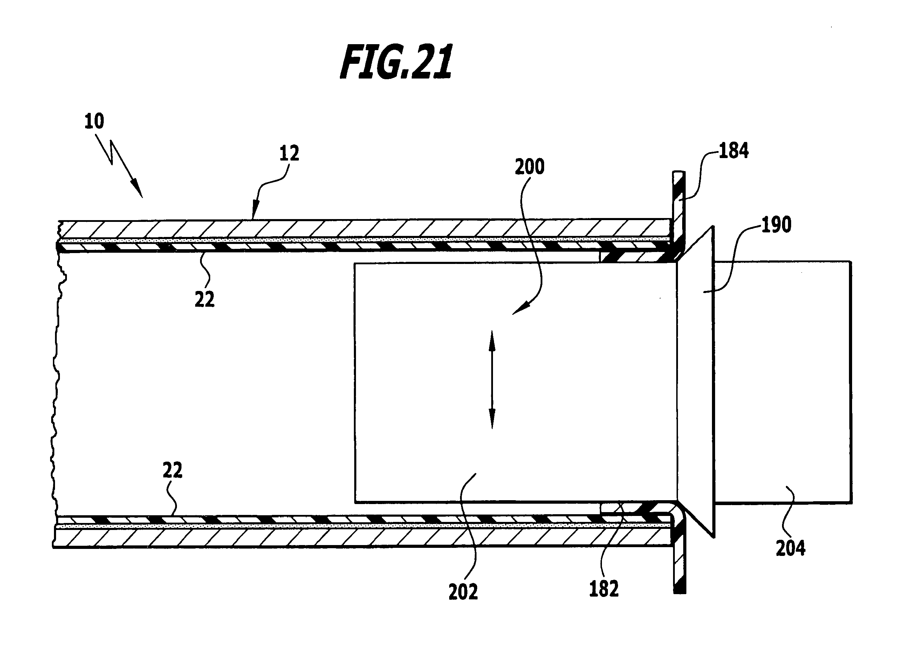

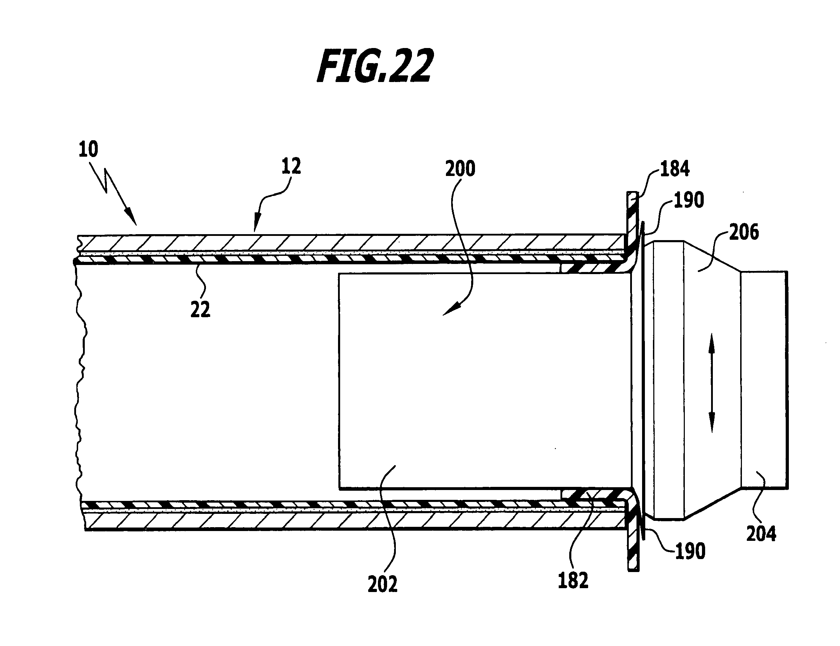

Dabei ist der Druckring 190 - wie beispielsweise in Fig. 21 und 22 dargestellt - verschiebbar auf dem Blasdorn 200 angeordnet, der dazu eingesetzt werden kann, mit einem ersten inneren Abschnitt 202 den hülsenförmigen Abschnitt 182 an der Innenhülle 20 anzupressen und mit einem zweiten äußeren Abschnitt 204 den Druckring 190 in Richtung der Stirnseiten 150a, 150b zu beaufschlagen, wobei sich ein Mantel 206 des Blasdorns 200 im zweiten Abschnitt 204 stärker aufwölbt als im ersten Abschnitt 202 und dadurch auf den Druckring 190 einwirkt, wie in Fig. 22 dargestellt.

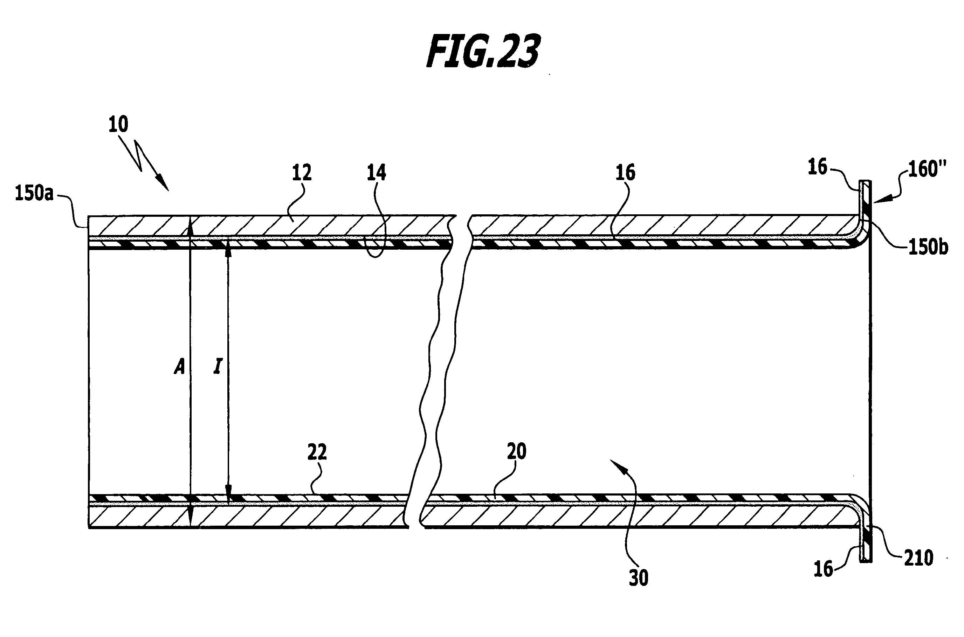

Bei einem vierten Ausführungsbeispiel eines erfindungsgemäßen Rohrs, dargestellt in Fig. 23, erfolgt ein Schutz der Stirnseiten 150a, 150b dadurch, dass ein Endstück 210 der Innenhülle 20 über die Stirnseiten 150a, 150b beim Einbringen der Innenhülle 20 übersteht und nach deren Fixierung am Rohrkörper 12, beispielsweise in einer hierzu vorgesehenen Station, über die Stirnseiten 150a, 150b gezogen wird und somit mit den Stirnseiten 150a, 150b verklebt wird, wobei dieses Endstück 200 ebenfalls mit der Klebstoffschicht 16 versehen ist, so dass nach Umlegen des Endstücks 200 über die Stirnseiten 150a, 150b dieses an die Stirnseiten 150a, 150b mit der Klebstoffschicht 16 angeklebt werden kann und den Kunststofffilm 160" zum Schutz der Stirnseiten 150a, 105b bildet.

Hierzu kann auch der im Zusammenhang mit dem dritten Ausführungsbeispiel beschriebene Blasdorn 200 mit dem Druckring 190 eingesetzt werden.

Bei einem fünften Ausführungsbeispiel, dargestellt in Fig. 22 ist die Innenhülle 20' aus zwei Schichten aufgebaut, nämlich aus einer Funktionsschicht 220, welche der Innenfläche 22 zugewandt ist und einer Haftschicht 222, welche die Kleberschicht 16 trägt und der Innenwandfläche 14 des Rohrkörpers 12 zugewandt ist.

Damit lassen sich die Funktionen der Innenhülle 20' trennen. Einmal kann die Haftschicht 222 so ausgebildet sein, dass sie optimal mit der Klebstoffschicht 16 zusammenwirkt und somit eine optimale Fixierung der Innenhülle 20' an der Innenwandfläche 14 des Rohrkörpers 12 gewährleistet.

Andererseits kann die Funktionsschicht 220 so ausgebildet sein, dass sie eine geeignete Diffusionssperre beispielsweise gegen Schwefelwasserstoff, Wasserdampf und/oder korrosive Gase bildet und gegebenenfalls auch noch eine erhöhte Abrasionsbeständigkeit, Chemikalienbeständigkeit oder Temperaturbeständigkeit aufweist.

## Patentansprüche

1. Neurohr (10) zur Führung von Flüssigkeiten, insbesondere zur Führung von Prozesswasser oder privatem und/oder gewerblichem und/oder chemisch belastetem Abwasser, umfassend einen Rohrkörper (12) und eine einen Durchlasskanal (30) umschließende und gegenüber den Flüssigkeiten im Wesentlichen standfeste Auskleidung (22), **dadurch gekennzeichnet, dass** die Auskleidung durch eine Innenhülle (20) aus einem an eine Innenwandfläche (22) des Rohrkörpers (12) angelegten Schlauch (70) aus Kunststofffolie gebildet ist, welcher mit der Innenwandfläche (14) des Rohrkörpers (12) stoffschlüssig verbunden ist, und dass Stirnseiten (150a, 150b) des Rohrkörpers (12) mit einem Kunststofffilm (160) beschichtet sind.

2. Neurohr nach Anspruch 1, **dadurch gekennzeichnet, dass** der Kunststofffilm (160) durch eine Kunststofffolie gebildet ist, welche an den Stirnseiten (150a, 150b) durch Verkleben fixiert ist.

3. Neurohr nach Anspruch 1 oder 2, **dadurch gekennzeichnet, dass** die den Rohrkörper (12) als Innenhülle (20) auskleidende Kunststofffolie über die Stirnseiten (150a, 150b) gezogen ist.

4. Neurohr nach einem der voranstehenden Ansprüche, **dadurch gekennzeichnet, dass** die Kunststofffolie im Verlauf eines beim Aufheizens auf eine Temperatur von über 320°C gegenüber der Viskosität bei Raumtemperatur eine Viskositätszunahme zeigt.

5. Neurohr nach einem der voranstehenden Ansprüche, **dadurch gekennzeichnet, dass** die Kunststofffolie eine Polyolefine, insbesondere Polypropylen, umfassende Materialmatrix (40) aufweist.

6. Neurohr nach Anspruch 5, **dadurch gekennzeichnet, dass** die Materialmatrix (40) Polypropylen mit einem Anteil zwischen ungefähr 65 Gewichts-% und ungefähr 90 Gewichts-% umfasst.

7. Neurohr nach einem der Ansprüche 5 oder 6, **dadurch gekennzeichnet, dass** die Materialmatrix (40) als Füllstoff viskositätserhöhende Partikel (44) umfasst.

8. Neurohr nach einem der voranstehenden Ansprüche, **dadurch gekennzeichnet, dass** der Rohrkörper (12) ein Körper aus Metallguss ist.

9. Neurohr nach einem der voranstehenden Ansprüche, **dadurch gekennzeichnet, dass** die Innenhülle (20) durch eine Klebstoffschicht (16) fest mit der Innenwandfläche (14) des Rohrkörpers (12) verbunden ist.

10. Verfahren zum Herstellen eines Neurohrs zur Führung von Flüssigkeiten, insbesondere zur Führung von privatem und/oder gewerblichem und/oder chemisch belastetem Abwasser, mit einem Rohrkörper (12) und einer einen Durchlasskanal (30) des Neurohrs (10) umschließenden und gegenüber den Flüssigkeiten im Wesentlichen standfesten Auskleidung (20), **dadurch gekennzeichnet, dass** die Auskleidung als eine Innenhülle (20) in Form einer als Schlauch (70) ausgebildeten Kunststofffolie an eine Innenwandfläche (14) des Rohrkörpers (12) angelegt und mit der Innenwandfläche (14) stoffschlüssig verbunden wird, und dass Stirnseiten (150) des Rohrkörpers (12) mit einem Kunststofffilm (160) beschichtet werden.

11. Verfahren nach Anspruch 10, **dadurch gekennzeichnet, dass** die Innenhülle (20) als nicht oder geringfügig expandierter Schlauch (70) aus der Kunststofffolie auf einem Expansionsorgan (80) in den Rohrkörper (12) eingeführt und der Schlauch (70) durch Expandieren des Expansionsorgans (80) an die Innenwandfläche (14) des Rohrkörpers (12) zum stoffschlüssigen Verbinden mit dieser angelegt wird.

12. Verfahren nach Anspruch 11, **dadurch gekennzeichnet, dass** der Schlauch (70) zuerst mit einem mittigen Bereich (122) an dem Rohrkörper (12) angelegt wird und dann hiervon ausgehend sukzessive in Richtung von Rohrkörperenden an dem Rohrkörper (12) angelegt wird.

13. Verfahren nach einem der Ansprüche 11 oder 12, **dadurch gekennzeichnet, dass** der Schlauch (70) vor Einführen in den Rohrkörper (12) mit einer Klebstoffschicht (98) beschichtet wird und durch Expansion des Schlauchs (70) und Anlegen desselben mit der Klebstoffschicht (98) an der Innenwandfläche (14) der Schlauch (70) mit der Innenwandfläche (14) verklebt wird.

14. Verfahren nach einem der Ansprüche 10 bis 13, **dadurch gekennzeichnet, dass** der Schlauch (70) auf eine vorgebbare Temperatur durch das Expansionsorgan (80) temperiert wird.

15. Verfahren nach einem der Ansprüche 10 bis 14, **dadurch gekennzeichnet, dass** der Schlauch (70) in den aufgeheizten Rohrkörper (12) eingebracht wird.

## Claims

1. New pipe (10) for channelling liquids, in particular for channelling process water or private and/or commercial and/or chemically charged waste water, comprising a pipe body (12) and a lining (22) which is substantially stable with respect to the liquids and surrounds a flow channel (30), **characterized in that** the lining is formed by an inner sleeve (20) consisting of a hose (70) of plastic foil that is applied to an inner wall surface (22) of the pipe body (12) and is connected cohesively to the inner wall surface (14) of the pipe body (12), and **in that** end faces (150a, 150b) of the pipe body (12) are coated with a plastic film (160).

2. New pipe in accordance with Claim 1, **characterized in that** the plastic film (160) is formed by a plastic foil which is fixed to the end faces (150a, 150b) by adhesion.

3. New pipe in accordance with Claim 1 or 2, **characterized in that** the plastic foil lining the pipe body (12) in the form of an inner sleeve (20) is pulled over the end faces (150a, 150b).

4. New pipe in accordance with any of the preceding Claims, **characterized in that** the plastic foil exhibits an increase in viscosity in comparison with the viscosity thereof at room temperature when being heated to a temperature of over 320°C.

5. New pipe in accordance with any of the preceding Claims, **characterized in that** the plastic foil has a material matrix (40) comprising a polyolefin, and in particular, polypropylene.

6. New pipe in accordance with Claim 5, **characterized in that** the material matrix (40) comprises polypropylene in a proportion of between approximately 65 weight % and approximately 90 weight %.

7. New pipe in accordance with either of Claims 5 or 6, **characterized in that** the material matrix (40) comprises a filler in the form of viscosity-increasing particles (44).

8. New pipe in accordance with any of the preceding Claims, **characterized in that** the pipe body (12) is a body consisting of a metal casting.

9. New pipe in accordance with any of the preceding Claims, **characterized in that** the inner sleeve (20) is firmly connected to the inner wall surface (14) of the pipe body (12) by an adhesive layer (16).

10. Method for manufacturing a new pipe for channelling liquids, in particular for channelling private and/or commercial and/or chemically charged waste water, comprising a pipe body (12) and a lining (20) which is substantially stable with respect to the liquids and surrounds a flow channel (30) of the new pipe (10), **characterized in that** the lining is applied to an inner wall surface (14) of the pipe body (12) as an inner sleeve (20) in the form of a plastic foil configured as a hose (70) and is connected to the inner wall surface (14) in cohesive manner, and **in that** end faces (150) of the pipe body (12) are coated with a plastic film (160).

11. Method in accordance with Claim 10, **characterized in that** the inner sleeve (20) is inserted in the form of a not expanded or only slightly expanded hose (70) of the plastic foil into the pipe body (12) on an expansion part (80), and the hose (70) is applied to the inner wall surface (14) of the pipe body (12) for connecting thereto in cohesive manner by expanding the expansion part (80).

12. Method in accordance with Claim 11, **characterized in that** a central region (122) of the hose (70) is initially applied to the pipe body (12) and then commencing therefrom it is gradually applied to the pipe body (12) in a direction towards the ends of the pipe body.

13. Method in accordance with either of the Claims 11 or 12, **characterized in that** the hose (70) is coated with an adhesive layer (98) prior to being inserted into the pipe body (12), and the hose (70) is adhered to the inner wall surface (14) by expanding the hose (70) and applying the hose with the adhesive layer (98) to the inner wall surface (14).

14. Method in accordance with any of the Claims 10 to 13, **characterized in that** the hose (70) is kept at a predetermined temperature by the expansion part (80).

15. Method in accordance with any of the Claims 10 to 14, **characterized in that** the hose (70) is inserted into the heated pipe body (12).

## Revendications

1. Nouveau tube (10) de circulation de liquides, en particulier de circulation de l'eau des processus industriels ou des eaux usées domestiques et/ou industrielles et/ou contenant des effluents chimiques, comportant un corps tubulaire (12) et un garnissage (22) entourant un conduit de circulation (30) et sensiblement résistant aux liquides, **caractérisé en ce que** le garnissage est formé par une gaine intérieure (20) formée par un tuyau flexible (70) en film plastique, qui est appliqué contre la paroi intérieure (14) du corps tubulaire (12) et qui est assemblé par adhérence de matière à la paroi intérieure (14) du corps tubulaire (12), et **en ce que** les faces frontales (150a, 150b) du corps tubulaire (12) sont revêtues d'un film plastique (160).

2. Nouveau tube selon la revendication 1, **caractérisé en ce que** le film plastique (160) est formé par une feuille en matière plastique, qui est fixée par collage contre les faces frontales (150a, 150b).

3. Nouveau tube selon la revendication 1 ou 2, **caractérisé en ce que** la feuille en matière plastique, revêtant le corps tubulaire (12) en formant une gaine intérieure (20), est tirée au-dessus des faces frontales (150a, 150b).

4. Nouveau tube selon l'une quelconque des revendications précédentes, **caractérisé en ce que** la feuille en matière plastique, au cours d'un chauffage jusqu'à une température de plus de 320°C, présente une augmentation de viscosité par rapport à sa viscosité à température ambiante.

5. Nouveau tube selon l'une quelconque des revendications précédentes, **caractérisé en ce que** la feuille en matière plastique comporte une matrice de matière (40) contenant une polyoléfine, en particulier du polypropylène.

6. Nouveau tube selon la revendication 5, **caractérisé en ce que** la matrice de matière (40) contient du polypropylène dans une proportion entre environ 65 % en poids et environ 90 % en poids.

7. Nouveau tube selon la revendication 5 ou 6, **caractérisé en ce que** la matrice de matière (40) contient une matière de remplissage formée par des particules (44) augmentant la viscosité.

8. Nouveau tube selon l'une quelconque des revendications précédentes, **caractérisé en ce que** le corps tubulaire (12) est un corps en fonte métallique.

9. Nouveau tube selon l'une quelconque des revendications précédentes, **caractérisé en ce que** la gaine intérieure (20) est assemblée de manière fixe à la paroi intérieure (14) du corps tubulaire (12) par l'intermédiaire d'une couche de colle (16).

10. Procédé pour la réalisation d'un nouveau tube de circulation de liquides, en particulier de circulation de l'eau des processus industriels ou des eaux usées domestiques et/ou industrielles et/ou contenant des effluents chimiques, lequel comporte un corps tubulaire (12) et un garnissage (20) entourant un conduit de circulation (30) du nouveau tube (10) et sensiblement résistant aux liquides, **caractérisé en ce que** le garnissage, sous la forme d'une gaine intérieure (20) formée par une feuille en matière plastique réalisée sous la forme d'un tuyau flexible (70), est appliqué contre une paroi intérieure (14) du corps tubulaire (12) et est assemblé par adhérence de matière à la paroi intérieure (14) du corps tubulaire (12), et **en ce que** les faces frontales (150a, 150b) du corps tubulaire (12) sont revêtues d'un film plastique (160).

11. Procédé selon la revendication 10, **caractérisé en ce que** la gaine intérieure (20) est introduite sur un organe d'expansion (80) dans le corps tubulaire (12), sous la forme d'un tuyau flexible (70) non expansé ou faiblement expansé, réalisé dans une feuille en matière plastique, et le tuyau flexible (70), sous l'effet de l'expansion de l'organe d'expansion (80), est appliqué contre la paroi intérieure (14) du corps tubulaire (12) en vue d'un assemblage par adhérence de matière avec ce dernier.

12. Procédé selon la revendication 11, **caractérisé en ce que** le tuyau flexible (70) est appliqué d'abord avec une zone centrale (122) contre le corps tubulaire (12) et ensuite, à partir de cette zone, est appliqué successivement vers les extrémités du corps tubulaire contre le corps tubulaire (12).

13. Procédé selon la revendication 11 ou 12, **caractérisé en ce que** le tuyau flexible (70) est revêtu d'une couche de colle (98) avant l'introduction dans le corps tubulaire (12), et, sous l'effet de l'expansion du tuyau flexible (70) et de l'application de celui-ci avec la couche de colle (98) contre la paroi intérieure (14), le tuyau flexible (70) est collé à la paroi intérieure (14).

14. Procédé selon l'une quelconque des revendications 10 à 13, **caractérisé en ce que** le tuyau flexible (70) est régulé à une température prédéfinissable par l'organe d'expansion (80).

15. Procédé selon l'une quelconque des revendications 10 à 14, **caractérisé en ce que** le tuyau flexible (70) est introduit dans le corps tubulaire (12) chauffé.
